# EUROPÄISCHE PATENTSCHRIFT

(11) **EP 3 014 561 B1**
(45) Veröffentlichungstag und Bekanntmachung des Hinweises auf die Patenterteilung: **04.03.2020**
(21) Anmeldenummer: 14724718.3
(22) Anmeldetag: 14.05.2014
(51) Int. Cl.: G06Q 50/04

(54) **VERFAHREN UND VORRICHTUNG ZUR ÜBERWACHUNG EINER TEILEENTNAHME, TEILEBEREITSTELLUNGSSYSTEM, VERWENDUNG EINES VIBRATIONSALARMGERÄTS**
METHOD AND APPARATUS FOR MONITORING A REMOVAL OF PARTS, PARTS SUPPLY SYSTEM, USING A VIBRATION ALARM DEVICE
PROCÉDÉ ET DISPOSITIF DE SURVEILLANCE D'UNE PRISE DES PIÈCES, SYSTÈME DE PIÈCES D'APPROVISIONNEMENT, D'UN DISPOSITIF DE VIBRATION ALARM

(30) Priorität: 26.06.2013 DE 102013212333
(43) Veröffentlichungstag der Anmeldung: 04.05.2016
(73) Patentinhaber: Bayerische Motoren Werke Aktiengesellschaft, 80809 München (DE)
(72) Erfinder: MÖCK, Jürgen, 80935 München (DE); ROMEY, Maik, 04828 Bennewitz (DE); SCHÖNIGER, Kerstin, 04109 Leipzig (DE); WOLF, Elisabeth, 82140 Olching (Geiselbullach) (DE); KOENIG, Ralf, 04105 Leipzig (DE)
(86) Internationale Anmeldenummer: PCT/EP2014/059855
(87) Internationale Veröffentlichungsnummer: WO 2014/206631

(56) Entgegenhaltungen:
- WO-A1-01/11553
- WO-A1-2013/016803
- WO-A2-98/20723
- DE-A1-102012 014 130
- DE-U1-202005 013 349
- KR-B1- 100 276 430
- US-A1- 2010 073 497
- US-A1- 2011 158 476
- US-A1- 2011 211 760
- US-A1- 2012 170 809
- US-A1- 2012 239 179
- US-A1- 2013 154 826
- US-B1- 7 268 692
- PIERARD E ED - GRABOT BERNARD SCHLEGEL THOMAS: "Reference architecture for car assembly monitoring", COMPUTERS IN INDUSTRY, ELSEVIER SCIENCE PUBLISHERS. AMSTERDAM, NL, Bd. 27, Nr. 2, 1. Oktober 1995 (1995-10-01), Seiten 203-213, XP004001205, ISSN: 0166-3615, DOI: 10.1016/0166-3615(95)00033-9

## Beschreibung

Die vorliegende Erfindung betrifft ein Verfahren und eine Vorrichtung zur Überwachung einer Teileentnahme sowie ein Teilebereitstellungssystem. Insbesondere betrifft die Erfindung ein Verfahren und eine Vorrichtung zur Überwachung einer Teileentnahme sowie ein Teilebereitstellungssystem, bei welchen ein Entnahmefehler bei der Entnahme von Teilen erkannt und für eine Bedienperson erkennbar gemacht werden.

Die Endmontage eines Kraftfahrzeugs gliedert sich in Takte. In vielen dieser Takte nimmt ein Werker (im Sinne der Anmeldung eine Bedienperson) ein oder mehrere Teile aus einem Teileregal und montiert es am entstehenden Fahrzeug. Das Fahrzeug wird auf einem Band kontinuierlich weitertransportiert. Kleinteile, die im jeweiligen Montageschritt verarbeitet werden, liegen in sogenannten Kleinladungsträgern (KLT) in meist abgeschrägten Regalen. Es ist Aufgabe des Werkers, das richtige Teil für den Produktionsauftrag, den er gerade bearbeitet, innerhalb der vorgegebenen Taktzeit zu entnehmen.

Regale und Flächen für die Teilebereitstellung sind üblicherweise modular aufgebaut und auf den jeweiligen Takt und auf die ergonomischen Anforderungen abgestimmt. Die Teile liegen gemeinhin in einem Behälter (KLT(Kleinladungsträger) oder GLT(Großladungsträger)) mit Barcode zur Entnahme bereit. Die KLTs sind Kunststoffbehälter, die eine Farbcodierung aufweisen können. Die Teile können in teilespezifischen Inletts bzw. auch in mehreren Lagen im Behälter liegen. Die Entnahme der Teile findet durch den Werker von der Vorderseite her statt. Im Modellmix werden auf dem Band verschiedene Modelllinien und Verbauvarianten durch den Werker bearbeitet. Der Werker erhält die notwendigen Montageinformationen über einen Laufzettel des Fahrzeuges, eine Montagefahne, einen Monitor oder sonstige Mittel der Auftragsdokumentation. Die Ausmaße der Regale sind von dem jeweiligen Anwendungsfall abhängig. Ein erster typischer Anwendungsfall betrifft die Teileentnahme in der Montage oder Vormontage. Die Breite der Regale für diesen Anwendungsfall beträgt meist maximal sechs Meter, oft nur zwei bis drei Meter, die Höhe übersteigt meist zwei Meter nicht, die am meisten genutzte Entnahmehöhe liegt zwischen 90 und 160 cm. Ein zweiter Anwendungsfall betrifft den Logistikbereich, wo Teile im sogenannten Kanban-Prozess aus einer als Supermarkt oder Großmarkt bezeichneten Logistikfläche oder an Kommissionierarbeitsplätzen entnommen werden. Dabei entnimmt ein Routenzugführer bzw. Linerunner oder Kommissionierer von der Montage angeforderte Teile behälterweise aus dem sogenannten Supermarkt und löst damit gegebenenfalls selbst einen Kanban-Prozess in Richtung eines Teilelieferanten aus. In Supermärkten werden weitere Teile- oder Behälterentnahmen zur Carsetbildung, bzw. Inhosusequenzierung, Vereinzelung, Portionierung oder auch Vormontagen durchgeführt. Die Begrifflichkeiten wachsen weiterhin stetig an. Es handelt sich um Prozessbeschreibungen, die jedoch alle einen Teile- bzw. Behälterentnahmeprozess oder einen Quelle-Senke Wechsel derselben beschreiben. Bei diesen Anwendungsfällen können die Regale oder Flächen eine Breite von bis zu 60 m erreichen; für die Höhe gilt das zuvor Gesagte.

Bei der Teileentnahme aus einem durch ein vorstehend beschriebenes Regal gebildeten oder ein solches Regal aufweisenden Teilebereitstellungssystem kann es aus verschiedenen Gründen zu Entnahmefehlern kommen. Dabei ist es bekannt, den fehlerfreien Zugriff des Werkers durch nicht elektronische Mittel wie etwa Formen, Farben, Warnungen und Separation zu unterstützen. Dennoch ist es wünschenswert, die Rate von Fehlgriffen bzw. Entnahmefehlern weiter zu senken. Als typische Gründe für die Entnahme von falschen Teilen aus einem Regal können beispielsweise angegeben werden:
- Der Werker beachtet den Laufzettel oder den Monitor nicht. Er entnimmt ein Teil nach Bauchgefühl oder eigenen Erfahrungswerten typischer Merkmalskombinationen.
- Der Werker sieht am Laufzettel auf die falsche Stelle oder liest zu flüchtig. Er liest einen plausiblen Code in einem Datenfeld, das leicht darüber oder darunter steht, aber ein anderes Ausstattungsmerkmal codiert.
- Der Werker liest den Code im korrekten Datenfeld richtig, kann ihn sich aber über die Zeit, die er beispielsweise für ein Umdrehen um die eigene Achse braucht, nicht fehlerfrei merken, sondern erinnert sich z.B. an den Code von einem vorherigen Fahrzeug.
- Der Werker muss den Ausstattungscode in ein konkretes Teil übersetzen. Das ist dann problematisch, wenn ein Ausstattungscode für ein Fahrzeug etwas anderes bedeutet als für ein anderes Fahrzeug. Dabei können Fehler gemacht werden. Erschwerend kommt hier hinzu, dass sich Teile oft nur in geringen Details unterscheiden, z.B., Verkleidungsteile in leicht unterschiedlichen Farben oder Bremsleitungen, die sich nur durch unterschiedliche Biegungen unterscheiden. Besonders problematisch ist dies für Springer, die an mehreren Takten arbeiten.
- Das Regal ist falsch bestückt, d.h., der Behälter im Regal steht entweder nicht an der richtigen Stelle oder der Behälter steht zwar richtig, aber im Behälter befinden sich die falschen Teile.

Zur Minderung des Problems der Falschentnahme von Teilen sind bereits verschiedene Lösungen vorgeschlagen worden.

Bei einem als "Pick-by-Light" bekannten System befindet sich an jedem Lagerfach eine Signalleuchte mit einer Ziffern- oder auch alphanumerischen Anzeige sowie mindestens einer Quittierungstaste und eventuell Eingabe- bzw. Korrekturtasten. Die Lagerfächer sind verkabelt, soweit nicht die Datenübertragung über Funk oder dünne Metallbänder erfolgt. Bei der Kommissionierung leuchtet die Signallampe am Lagerfach der aktuellen Pickposition (d. h., Entnahmeposition) auf und auf der Anzeige erscheint die zu entnehmende Anzahl. Die Entnahme wird dann mittels einer Quittiertaste bestätigt und die Bestandsänderung in Echtzeit an ein Lagerverwaltungssystem zurückgemeldet. Bei diesem System ist ein selbstständiges Erkennen von Fehlfunktionen, insbesondere in der Anzeige, nicht vorgesehen. Daher können hohe Wartungskosten entstehen. Eine Identifizierung von einzelnen Waren ist nicht vorgesehen, vielmehr ist das System auf die Zusammenstellung von Aufträgen beschränkt. Die Entnahme muss oft zwingend in einer vorgegebenen Auftragsreihenfolge erfolgen, und es treten häufig Zählfehler auf, wenn der Kommissionierer beispielsweise die Quittierungstaste vor dem Entnehmen betätigt. Für die Bedienperson fällt ein erhöhter optischer Suchaufwand an, was die Bearbeitungsgeschwindigkeit herabsetzen kann. Bei Verkabelung der Regale ist das System vergleichsweise unflexibel, ferner sind sowohl die Installation als auch die Implementierung von Änderungen mit hohen Kosten verbunden.

Bei einem als "Pick-by-Voice" bekannten Kommissioniersystem erhält die Bedienperson ihre Arbeitsanweisungen akustisch von einem transportablen Computer (Client) über ein Head-Set. Die Rückmeldung zum Host findet ebenso über Sprache statt, wobei die Daten per Funk übertragen werden. Auch mit diesem System ist nur eine sequenzielle Befehlsausgabe und eine Zusammenstellung von Aufträgen möglich. Zudem ist die übermittelbare Datenmenge vergleichsweise klein, und ein Scannen von Barcodes ist üblicherweise nicht möglich. Das System ist auch aus ergonomischer Sicht nicht optimal, was zu Belastungen bei langen Arbeitszeiten führen kann. Aufgrund der monotonen Stimme ist die Mitarbeiterakzeptanz oft gering, und aufgrund der als künstlich empfundenen Sprache können Erkennungsprobleme und Anfangsschwierigkeiten bei Anwendern auftreten. Das Teaching von sprecherabhängigen Systemen erfordert üblicherweise eine nicht unerhebliche Zeit, und eine Kommunikation der Mitarbeiter untereinander ist kaum möglich. Zudem ist für die Sprachverarbeitung eine hohe Rechnerleistung erforderlich.

Ein als "Pick-by-Vision" bezeichnetes System, bei welchem der Bedienperson visuelle Informationen über eine Datenbrille in das Blickfeld eingeblendet werden, befindet sich derzeit im Entwicklungsstadium. Lösungen mit Lasergittern bzw. RFID sind ebenfalls mit Nachteilen, insbesondere hohen Kosten behaftet.

Aus der US 2012239179 A1 ist eine Vorrichtung und ein Verfahren zur Überwachung eines Herstellungsprozesses bekannt.

Es ist eine Aufgabe der vorliegenden Erfindung, ein Verfahren und eine Vorrichtung zur Überwachung einer Teileentnahme sowie ein Teilebereitstellungssystem zu schaffen, welche die voranstehend beschriebenen Nachteile zumindest teilweise beheben. Teilaufgaben der vorliegenden Erfindung betreffen u.a.:
- Die Vermeidung einer Diskriminierung von behinderten Mitarbeitern mit Einschränkungen, insbesondere im Hinblick auf das taktile Gefühl, das Gehör und den Sehsinn;
- die Vermeidung einer Diskriminierung fremdsprachiger Bedienpersonen;
- die Wahrung der Privatsphäre der Bedienperson;
- die Reduzierung von Ablenkungen durch visuelle oder akustische Signale;
- die Vermeidung von Elektronik oder Anzeigen am Regal, um die Freiheit in der Konstruktion und/oder Ergonomie der Regalgestaltung zu verbessern;
- eine Verringerung der Investitionskosten, insbesondere im Hinblick auf Lasergitter bzw. Pick-by-Light-Systemen.

Die vorstehende Aufgabe wird gelöst durch ein erfindungsgemäßes Verfahren mit den Merkmalen des Anspruchs 1, eine Vorrichtung mit den Merkmalen des Anspruchs 11, ein Teilebereitstellungssystem mit den Merkmalen des Anspruchs 16 und eine Verwendung eines Vibrationsalarmgeräts mit den Merkmalen des Anspruchs 19. Dabei gelten Merkmale und Einzelheiten, die im Zusammenhang mit dem erfindungsgemäßen Verfahren beschrieben sind, auch im Zusammenhang mit der erfindungsgemäßen Vorrichtung, dem erfindungsgemäßen System und der erfindungsgemäßen Verwendung und jeweils wechselweise und umgekehrt, so dass bezüglich der Offenbarung zu den einzelnen Erfindungsgesichtspunkten stets wechselseitig Bezug genommen wird bzw. werden kann.

Nach einem ersten Gesichtspunkt der vorliegenden Erfindung wird ein Verfahren zur Überwachung einer Teileentnahme aus einem eine Vielzahl von Teileablageorten aufweisenden Teilebereitstellungssystem durch eine Bedienperson vorgeschlagen mit den Schritten:
- Bereitstellen eines Teileinventars, in welchem durch das Teilebereitstellungssystem bereitgestellten Teilen jeweilige Teileablageorte zugeordnet sind;
- Vorgeben einer Auswahl von Teilen, die wenigstens ein Teil aufweist, das durch die Bedienperson unter den bereitgestellten Teilen aus dem Teilebereitstellungssystem zu entnehmen ist;
- Erkennen eines Entnahmefehlers der Bedienperson; und
- Ausgeben einer Warnung, wenn ein Entnahmefehler erkannt wurde, durch Aktivieren eines von der Bedienperson zu tragenden Vibrationsalarmgeräts.

Das Teilebereitstellungssystem ist vorzugsweise einem Montage- oder Vormontage- oder Logistikbereich im Fahrzeug-, insbesondere Automobilbau zugeordnet. Im Sinne der Erfindung kann ein Teilebereitstellungssystem jede Vorrichtung, Anordnung oder jedes System zur Lagerung und/oder Bereithaltung von Teilen sein, wie etwa ein Palettenhochregal, ein Rollregal, ein Sortierkastenschubladenschrank, ein Kleinteilemagazin, ein Logistikmagazin oder dergleichen, und kann beispielsweise, aber nicht nur, Teil eines Montage-, Vormontage-, Kommissionierungs-, Postverteil- oder Handelslagersystems sein. Unter einem Teil im Sinne der Erfindung kann ein einzelnes, eindeutig identifizierbares Teil wie etwa ein Fahrzeugteil in einer bestimmten Farbe oder ein Bordbuch, die für ein bestimmtes Fahrzeug gebraucht werden, oder eine Art bzw. Gruppe von Teilen wie etwa ein Standard-Verbindungselement oder dergleichen, die für viele Fahrzeuge Verwendung finden, verstanden werden. Die Bereitstellung von Teilen umfasst somit sowohl die Kleinteilebereithaltung in Sammelbehältern als auch Just-in-Sequence-Teile. Ein Teileablageort kann im Sinne der Erfindung beispielsweise, aber nicht nur, ein Regalfach, ein Schubladenfach, ein Kleinladungsträger oder dergleichen sein. Das Teileinventar, in welchem Teile jeweiligen Teileablageorten zugeordnet sind, wird vorzugsweise in Form eines Datensatzes bereitgestellt. Dabei sind können Teile oder Teilearten durch eine Identifikationsnummer und können die Teileablageorte beispielsweise durch eine Nummerierung, einen Koordinatensatz, ein Raster oder dergleichen repräsentiert sein.

Unter einer Auswahl von Teilen kann beispielsweise, aber nicht nur, eine Stückliste, eine Auftragsliste, eine Bestellliste oder dergleichen verstanden werden. Die Vorgabe der Teileauswahl für die Bedienperson kann etwa auf Papier, an einem Bildschirm, einer mobilen Datenerfassungseinheit wie etwa einem Scanner oder dergleichen geschehen. Für die Durchführung des Verfahrens wird die Teileauswahl vorzugsweise von einem Warenwirtschaftssystem oder dergleichen als Datensatz bereitgestellt, etwa über eine Netzwerkschnittstelle, über Funk, auf Datenträger, oder in physikalischer Form, wobei in letzterem Fall die Teileauswahl in geeigneter Weise erfasst und in einen Datensatz umgewandelt wird.

Als ein Vibrationsalarmgerät wird im Sinne der Erfindung jedes Gerät verstanden, welches ausgelegt und eingerichtet ist, auf Aktivierung hin in einer für die das Gerät tragende Person wahrnehmbaren Weise zu vibrieren. Als Vibrationsalarmgerät kommt beispielsweise, aber nicht nur, ein Vibrationsarmband, ein Mobiltelefon mit Vibrationsalarm oder dergleichen infrage. Es versteht sich, dass die Schritte des Erkennens und gegebenenfalls Ausgebens so lange wiederholt werden, bis die Stückliste oder dergleichen abgearbeitet ist oder der Vorgang anderweitig beendet wird. Durch die Verwendung eines Vibrationsarmbandes wird im Vergleich zu herkömmlichen Verfahren eine Reihe von Vorteilen verwirklicht. Eine Diskriminierung von Hör- und Sehbehinderten Personen hinsichtlich etwa einer Schwerhörigkeit oder Rot/Grün-Schwäche oder anderer Sehschwächen sowie von fremdsprachigen Mitarbeitern wird vermieden, da die Erkennung von Lichtsignalen das Hören von Signaltönen sowie das Verstehen von gesprochenen Anweisungen nicht erforderlich sind. Die Privatsphäre der Bedienperson wird respektiert, da Fehlgriffe nicht sofort nach außen sichtbar werden, sondern durch eine persönliche Mensch-Maschine-Schnittstelle abgebildet werden. Da die Ausgabe eines Signals auf Fehlgriffe beschränkt werden kann (aber nicht muss), ist die Bedienperson nicht durch visuelle oder akustische Signale abgelenkt. Es ist sogar eine Kommunikation mit anderen Mitarbeitern möglich. Da am Regal selbst keine Elektronik oder Anzeigen erforderlich sind, ist weitgehende Freiheit in der Konstruktion und Ergonomie der Regalgestaltung gegeben. Im Vergleich mit Lasergittern oder Pick-by-Light-Systemen sind wesentlich geringere Investitionskosten aufzubringen.

In einer bevorzugten Ausführungsform weist der Schritt des Erkennens eines Entnahmefehlers die Schritte auf:
- Erfassen eines Teileentnahmeorts in dem Teilebereitstellungssystem als ein Ort einer Teileentnahme durch die Bedienperson;
- Vergleichen des erfassten Teileentnahmeorts mit einem Teileablageort wenigstens eines der Teile der vorgegebenen Auswahl von Teilen anhand der Zuordnung des Teileablageorts in dem Teileinventar; und
- Feststellen, dass ein Entnahmefehler vorliegt, wenn der Teileentnahmeort nicht mit dem Teileablageort des wenigstens einen der Teile aus der vorgegebenen Auswahl von Teilen übereinstimmt.

Ein Teileentnahmeort bzw. ein Ort einer Teileentnahme ist im Sinne der Erfindung ein Ort, an welchem die Bedienperson ein Teil entnimmt oder entnommen hat oder zu entnehmen sich anschickt. Die Erfassung des Teileentnahmeorts kann beispielsweise auf optische, sensorische Weise, durch RFID, durch Gewichtsmessung an einem Behälter und andere Verfahren erfolgen.

In einer Weiterbildung der Erfindung weist der Schritt des Erfassens des Teileentnahmeorts die Schritte auf:
- Erfassen einer Handposition der Bedienperson; und
- Zuordnen der erfassten Handposition der Bedienperson zu einem der Teileablageorte des Teilebereitstellungssystems.

Die Erfassung der Handposition erfolgt insbesondere unter Verwendung einer Abtasteinheit auf optische und/oder sensorische Weise, vorzugsweise mit Auflösung in der Tiefenrichtung der Abtasteinheit. Unter einer Abtasteinheit wird im Sinne der Erfindung eine Anordnung verstanden, die optische und/oder sensorische Mittel wie etwa eine Kamera, insbesondere 3D-Kamera, oder Tiefenkamera, ein 3D-Sensor oder Tiefensensor oder dergleichen aufweist. In einer Abtasteinheit können mehrere gleiche oder unterschiedliche der genannten Mittel angeordnet sein. Optische und sensorische Mittel können kombiniert sein, etwa als CCD-Sensoranordnung mit einer Vorschaltoptik. Die Abtasteinheit kann auf allen geeigneten Frequenzen elektromagnetischer Strahlung einschließlich des nicht sichtbaren Lichts oder mit Schall, insbesondere Ultraschall, arbeiten. Eine Abtastung im Infrarot-Licht ist dabei besonders bevorzugt. Unter einer Auflösung in Tiefenrichtung ist eine Auflösung in Richtung der optischen (oder akustischen) Achse, d. i. in der Regel die Hauptabtastrichtung bzw. eine Mittelrichtung eines Ausleuchtbereichs der Abtasteinheit zu verstehen. Die Abtasteinheit liefert ein Abbild eines Raumsegments in ihrem Erfassungs- bzw. Abtast- oder Ausleuchtbereich. Aus dem Abbild, das durch Bilddaten repräsentiert wird, wird die Handposition errechnet. Teileablageorte können als Nummern oder Koordinaten nach Etagen- und Standortraster oder anderen Kriterien identifizierbar sein und durch einen virtuellen Ablageort, der einem Raumsegment mit möglichen Handpositionen im Zusammenhang mit der Teileentnahme entspricht, repräsentiert werden. Eine Zuordnung der Handposition zu solchen Identifikationsmerkmalen erleichtert und vereindeutigt den Ortsvergleich. In einem Anwendungsfall der vorliegenden Erfindung, in welchem in einem Hochregallager sich die Bedienperson eines Gabelstaplers bedient, kann in gleicher Weise anstelle der Handposition der Bedienperson eine Gabelposition des Gabelstaplers erfasst werden.

In einer bevorzugten Weiterbildung der Erfindung erfolgt der Schritt des Erfassens der Handposition zu mehreren Zeitpunkten, wobei der Schritt des Zuordnens der Handposition die Schritte aufweist:
- Berechnen einer Bewegungstrajektorie durch Verknüpfen vergangener erfasster Handpositionen; und
- Antizipieren einer End-Handposition durch Extrapolieren der ermittelten Bewegungstrajektorie, wobei eine Zuordnung der Handposition dann erfolgt, wenn die antizipierte End-Handposition mit hinreichender Wahrscheinlichkeit einem möglichen Teileablageort entspricht.

Durch eine Antizipierung der Hand-Endposition können Teileentnahmeorte identifiziert werden, von denen die Bedienperson sich anschickt, ein Teil zu entnehmen. Wenn dies bereits frühzeitig erkannt wird, ist eine schnelle Warnung und damit eine schnelle Korrektur möglich. Diese bevorzugte Weiterbildung ist dann besonders vorteilhaft, wenn der Ausleuchtbereich der Abtasteinheit eine größere Ausdehnung in der Eingreifrichtung aufweist.

In einer bevorzugten Ausführungsform der vorliegenden Erfindung weist der Schritt des Erkennens eines Entnahmefehlers die Schritte auf:
- Erfassen einer Form eines durch die Bedienperson entnommenen Teiles;
- Vergleichen der erfassten Form mit einer dem Teileinventar zu entnehmenden Form wenigstens eines der Teile der vorgegebenen Auswahl von Teilen; und
- Feststellen, dass ein Entnahmefehler vorliegt, wenn die erfasste Form nicht mit der Form des wenigstens einen der Teile der vorgegebenen Auswahl übereinstimmt.

Die Erfassung der Form kann insbesondere durch die Abtasteinheit, vorzugsweise mit räumlicher Auflösung, vorgenommen werden und kann eine Bilderkennung umfassen. Die Feststellung, dass die erfasste Form nicht mit der Form des wenigstens einen der Teile der vorgegebenen Auswahl von Teilen übereinstimmt, umfasst auch den Fall, dass gar kein Teil entnommen wurde. Die Formerfassung kann zusätzliche Redundanz in der Fehlererekennung bringen oder in Fällen angewendet werden, in denen einem Teileablageort mehrere unterschiedliche Teile zugeordnet sind, wie etwa bei der JIS-Anlieferung.

In einer weiteren bevorzugten Ausführungsform wird jeweils ein Teil der vorgegebenen Auswahl von Teilen anhand einer vorgegebenen Reihenfolge in der Auswahl von Teilen für die Erkennung eines Entnahmefehlers herangezogen. Mit anderen Worten, bei dieser Ausführungsform erfolgt eine sequenzierte Auswahl von Teilen, es ist also immer nur ein Teileentnahmeort entsprechend dem gerade herangezogenen Teil erlaubt. Alternativ kann die Auswahl auch unsequenziert vorgegeben sein, d.h., die Bedienperson ist frei, welches Teil der vorgegebenen Auswahl von Teilen sie entnimmt, d.h., mehrere Teileentnahmeorte können ebenfalls erlaubt sein.

In einer bevorzugten Ausführungsform der vorliegenden Erfindung ist vorgesehen, dass das Vibrationsalarmgerät drahtlos aktiviert wird. Eine drahtlose Aktivierung im Sinne der Erfindung ist beispielsweise, aber nicht nur, über Funk, Infrarot-Schnittstelle, Ultraschall oder dergleichen möglich. Dabei kann jeder geeignete Übertragungsstandard wie etwa Bluetooth, WLAN, Mobilfunk oder andere zum Einsatz kommen. Die drahtlose Aktivierung verschafft der Bedienperson zusätzliche Bewegungsfreiheit.

In einer bevorzugten Ausführungsform der vorliegenden Erfindung ist der Schritt eines Ausgebens einer visuellen und/oder einer akustischen Warnung, wenn ein Entnahmefehler erkannt wurde, vorgesehen. Eine visuelle Ausgabe kann beispielsweise, aber nicht nur, mittels eines Bildschirms oder einer Signalleuchte oder Signalleuchtenanordnung am Regal, im Raum oder an dem Vibrationsalarmgerät selbst vorgesehen sein. Beispielsweise kann ein Vibrationsarmband einen Leuchtring oder dergleichen aufweisen. Da die Bedienperson im Falle des Entnehmens von Teilen oft in die Richtung der entnehmenden Hand blickt, kann eine solche visuelle Warnung rasch wahrgenommen werden. Eine akustische Warnung kann beispielsweise, aber nicht nur, durch eine Signalhupe, eine Sirene oder eine Klingel oder einen Lautsprecher, ggf. Ohrhörer, ausgegeben werden. Ein Lautsprecher kann auch in dem Vibrationsalarmgerät selbst integriert sein. Die Warnung kann beispielsweise ein Piepsen oder Summen oder dergleichen umfassen.

In einer Weiterbildung der vorliegenden Erfindung kann der Schritt eines Ausgebens einer vibrierenden und/oder visuellen und/oder akustischen Bestätigung, wenn ein fehlerfreier Entnahmevorgang erkannt wurde, vorgesehen sein. Dadurch können Eigenkontrollblicke der Bedienperson entfallen, die Arbeit kann beschleunigt werden und die Sicherheit für die Bedienperson erhöht werden. Die Bestätigung kann sich von der Warnung unterscheiden oder durch andere Mittel als die Warnung ausgegeben werden. Beispielsweise kann eine Warnung nur über das Vibrationsalarmgerät ausgegeben werden, während eine Bestätigung durch ein Piepsen oder ein Lichtsignal vermittelt wird. Werden die Warnung und die Bestätigung durch die gleichen Mittel ausgegeben, kann eine Unterscheidung beispielsweise, aber nicht nur, durch die Länge des Signals, ein durchgängiges bzw. unterbrochenes Signal, die Farbe einer visuellen Ausgabe oder dergleichen ermöglicht werden. Die Fehlerfreiheit kann, wie bereits beschrieben, allein aufgrund der Entnahmeposition und/oder anhand einer Bilderkennung des entnommenen Teils entschieden werden.

In einer weiteren Ausführungsform der vorliegenden Erfindung umfasst der Schritt des Bereitstellens des Teileinventars den Schritt eines Initialisierens der Ablageorte mittels zur Erkennung eines Entnahmefehlers verwendeter optischer und/oder sensorischer Mittel. Mit anderen Worten, die gleichen Mittel, die zur Erkennung eines Entnahmefehlers verwendet werden, werden zur Initialisierung der Ablageorte verwendet. Dabei kann die Bedienperson beispielsweise aufgefordert werden, nacheinander in bestimmte oder alle Ablageorte des Teileentnahmesystems zu greifen, durch einen Fingerzeig zu bestimmen oder einen Rand eines den jeweiligen Ablageorten entsprechenden Behälters mit dem Finger oder einem Zeigegerät nachzuzeichnen.

Nach einem weiteren Gesichtspunkt der vorliegenden Erfindung wird eine Vorrichtung zur Überwachung einer Teileentnahme aus einem eine Vielzahl von Teileablageorten aufweisenden Teilebereitstellungssystem durch eine Bedienperson vorgeschlagen, wobei die Vorrichtung Mittel aufweist, die zur Ausführung jeweiliger Verfahrensschritte des Verfahrens nach einem der vorstehenden Ansprüche ausgelegt und eingerichtet sind.

In einer bevorzugten Ausführungsform der Erfindung dieses Gesichtspunkts umfassen die Mittel wenigstens eine Abtasteinheit, die zum Abtasten eines zwischen der Bedienperson und den Teileablageorten verlaufenden Raumsegments ausgelegt und eingerichtet ist, und eine Auswerteeinheit, die mit der Abtasteinheit verbunden ist und die zum Auswerten von Ausgangssignalen der Abtasteinheit, um eine Handposition der Bedienperson und/oder eine Form eines entnommenen Teils zu erfassen, ausgelegt und eingerichtet ist. Als eine Abtasteinheit kann insbesondere, aber nicht nur, eine Tiefenkamera oder Tiefensensoranordnung vorgesehen sein, die vorzugsweise im Infrarotbereich oder auf andere optische und/oder sensorische Weise arbeitet. Es ist vorteilhaft, wenn als Raumsegment ein dünnes Raumsegment durch wenigstens im Wesentlichen parallele Ebenen mit geringem Abstand, die beispielsweise vor einem Eingriffbereich in einem Regalwagen verlaufen, definiert ist. Es wird dann ein Erfassen der Entnahmeposition mit einer Eindeutigkeit und Genauigkeit, die von einer Entfernung von der Abtasteinheit weitgehend unabhängig ist, ermöglicht. Unter einer Auswerteeinheit wird im Sinne der Erfindung eine Recheneinheit wie etwa ein PC oder ein Teil derselben bzw. desselben verstanden, die auch eine Speichereinheit, eine Vergleichseinheit, eine Eingabe-/AusgabeEinheit und weitere Einheiten aufweisen können und die insbesondere als Mittel zur Ausführung von Verfahrensschritten des erfindungsgemäßen Verfahrens ausgebildet sind, wie etwa den Vergleich der festgestellten Handposition oder Teileform mit vorgegebenen Werten etc.

In einer bevorzugten Ausführungsform der Erfindung gemäß diesem Gesichtspunkt weist die Abtasteinheit ein Gerät auf, das aus einer Gruppe ausgewählt ist, welche eine Sensoranordnung, die eine Kinect-Spezifikation aufweist, eine Stereo-Infrarot-Kameraeinheit, eine 2D-Laser-Tiefenscannereinheit umfasst und insbesondere eine Abtastreichweite von maximal 25 m und einen Erfassungswinkel von wenigstens 90°, vorzugsweise bis zu 180° aufweist. Als Sensoreinheit oder Tiefenscannereinheit kommt beispielsweise, aber nicht nur, ein sogenannter Laser-Ranger in Betracht. Es ist besonders vorteilhaft, wenn die Abtasteinheit außerhalb der Griffzone liegt, um eine Dejustage zu vermeiden. Dies kann leicht erreicht werden, wenn die Abtasteinheit oberhalb des Eingreifbereichs angeordnet ist. Dann reichen 180°, im Falle der Verwendung von zwei Einheiten - beispielsweise in den oberen Ecken - auch 90° als Erfassungswinkel aus, um alle denkbaren Regalformen abzudecken, da diese in der maximalen Griffhöhe limitiert sein können. In einem Anwendungsfall, in welchem sich eine Bedienperson eines Gabelstaplers bedient und die Gabeln des Gabelstaplers anstelle der Hände der Bedienperson erfasst werden, kann ein Erfassungsbereich von mehr als 180° sogar ungünstig sein, da dann ein Schutzgitter nicht ohne eine Raumabschattung für die Abtasteinheit angebracht werden könnte.

In einer weiteren Ausführungsform der vorliegenden Erfindung gemäß diesem Gesichtspunkt ist das Vibrationsalarmgerät drahtlos mit der Auswerteeinheit verbunden und ist das Vibrationsalarmgerät vorzugsweise ein Vibrationsarmband, eine Armbanduhr, eine an einem Armband angebrachte oder an einer körpernahen Bekleidungstasche zu tragende Vibrationseinheit, ein Mobiltelefon oder ein Smartphone.

In einer weiteren Ausführungsform der vorliegenden Erfindung weist die Vorrichtung eine Eigenfehlerrate von weniger als 100 ppm. und/oder eine Reaktionszeit von weniger als 1 s bei der Erkennung von Entnahmefehlern auf. Damit ist es möglich, Entnahmefehler schnell und zuverlässig zu erkennen. Eine Störung des Betriebsablaufs durch Fehlalarme kann weitgehend vermieden werden.

Gemäß einem weiteren Gesichtspunkt der vorliegenden Erfindung wird ein Teilebereitstellungssystem mit einer Vielzahl von Teileablageorten, in welche Teile zuordenbar abgelegt sind, vorgeschlagen, wobei das Teilebereitstellungssystem eine Vorrichtung zur Überwachung einer Teileentnahme wie vorstehend beschrieben aufweist.

Das Teilebereitstellungssystem ist vorzugsweise einem Kommissionierungssystem, einer Montagestrecke, einer Vormontagestrecke, einem Postverteilungssystem, einem Versandlagersystem oder dergleichen zugehörig.

Besonders bevorzugt weist das Teilebereitstellungssystem einen KLT-Behälterträger bzw. ein KLT-Regal als Teileablageorte und ein Teile- oder Behälter- oder Packstückförderband und/oder ein Montage- oder Vormontageband auf.

Gemäß einem noch weiteren Gesichtspunkt der vorliegenden Erfindung wird vorgeschlagen, zur Fehleranzeige an einem Kommissionier- oder Teileentnahmearbeitsplatz ein funkgesteuertes, vorzugsweise am Handgelenk tragbares, Vibrationsalarmgeräts zu verwenden, wobei das Vibrationsalarmgerät insbesondere bei Ausführung des vorstehend beschriebenen Verfahrens bzw. durch die vorstehend beschriebene Vorrichtung aktivierbar ist.

Weitere Merkmale, Aufgaben und Wirkungen der Erfindung ergeben sich aus der Beschreibung und den beigefügten Zeichnungen.

In den Zeichnungen zeigt bzw. zeigen:
- Fig. 1: eine schematische Darstellung einer Montagestrecke mit Regalen;
- Fig. 2: eine schematische Darstellung eines Teileentnahmesystems gemäß einem Ausführungsbeispiel der vorliegenden Erfindung mit einer Bedienperson;
- Fig. 3: eine schematische Darstellung eines Teileentnahmesystems gemäß einer Abwandlung des Ausführungsbeispiels mit einer Bedienperson;
- Fig. 4: eine schematische Darstellung eines Teileentnahmesystems gemäß einer weiteren Abwandlung des Ausführungsbeispiels mit einer Bedienperson;
- Fig. 5: eine schematische Darstellung einer Schaltungsanordnung in einem erfindungsgemäßen Teilebereitstellungssystem;
- Fig. 6: ein schematisches Schaltbild einer Funktionseinheit eines Vibrationsarmbandes zur Verwendung in der vorliegenden Erfindung;
- Fig. 7: eine schematische Darstellung eines Teilebereitstellungssystems gemäß einem noch weiteren Ausführungsbeispiel der vorliegenden Erfindung;
- Fig. 8: ein schematisches Ablaufdiagramm eines Verfahrens als ein weiteres Ausführungsbeispiel der vorliegenden Erfindung;
- Fig. 9: ein schematisches Ablaufdiagramm eines Teilprozesses in dem Verfahren von Fig. 8; und
- Fig. 10: eine schematische Darstellung eines Teileentnahmesystems gemäß einem weiteren Ausführungsbeispiel der vorliegenden Erfindung mit einer Bedienperson.

Nachstehend werden Ausführungsbeispiele der Erfindung anhand der beigefügten Zeichnungen beschrieben. Dabei sind gleiche oder ähnliche Bauteile in mehreren Figuren jeweils mit den gleichen oder ähnlichen Bezugszeichen versehen. Bauelemente und Merkmale, Zwecke und Wirkungen, die in Bezug auf ein Ausführungsbeispiel beschrieben werden, sind, soweit nicht ausdrücklich oder ersichtlich ausgeschlossen, als in jedem anderen Ausführungsbeispiel anwendbar anzunehmen und sollen auch in Bezug auf das jeweils andere Ausführungsbeispiel als offenbart gelten, auch wenn sie dort nicht ausdrücklich gezeigt und/oder beschrieben werden. Es versteht sich ferner, dass die Zeichnungen als schematisch zu verstehen sind und ihnen keine Einschränkungen im Hinblick auf konkrete Abmessungen oder Größenverhältnisse entnommen werden sollen, es sei denn, dies wäre ausdrücklich so beschrieben.

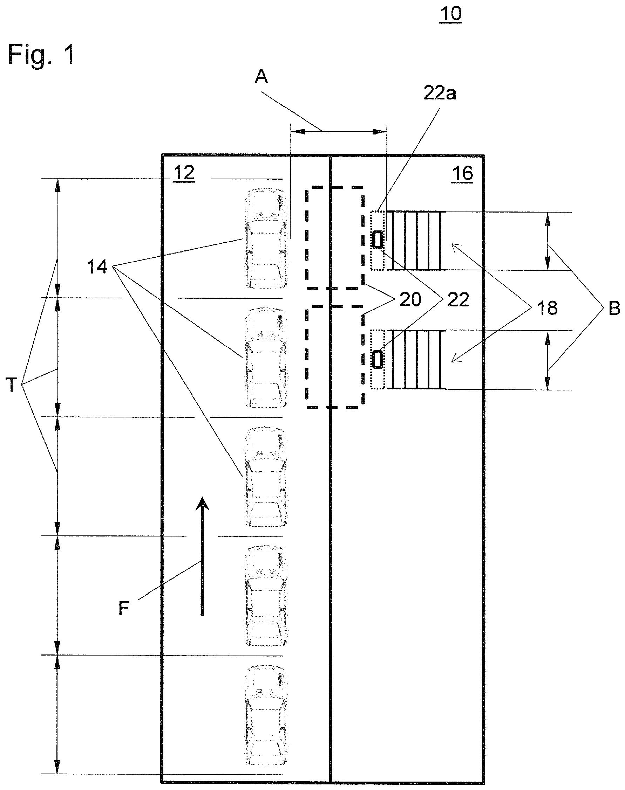

Fig. 1 zeigt in einer schematischen Draufsicht eine Montagestrecke 10, welche mit einem Teilebereitstellungssystem und einer Vorrichtung zum Überwachung einer Teileentnahme ausgestattet ist. Gemäß der Darstellung in Fig. 1 weist die Montagestrecke 10 einen Montagebereich 12 auf, in welchem eine Vielzahl von Kraftfahrzeugen 14 in jeweils unterschiedlichen Montagefertigstufen durch eine nicht näher dargestellte Förderanlage in einer Förderrichtung F gefördert werden. Parallel zu dem Montagebereich 12 erstreckt sich ein Bereitstellungsbereich 16, in welchem eine Vielzahl von Regalen 18 angeordnet sind. Die Regale 18 weisen jeweils eine Breite B auf. Zwischen den Fahrzeugen 14 und den Regalen 18 ist jedem Regal 18 ein Arbeitsbereich 20 zugeordnet, der auch einem Bewegungsbereich eines hier nicht näher dargestellten Monteurs (im Zusammenhang mit dieser Anmeldung auch als Bedienperson bezeichnet) entspricht.

Die Montage der Fahrzeuge 14 erfolgt in an sich bekannter Weise in Takten, wobei jeder Takt eine genau vorgeschriebene Abfolge von Montageschritten umfasst, die von der Bedienperson, die sich innerhalb des jeweiligen Arbeitsbereichs 20 aufhält, in der Zeit, in welcher sich ein Fahrzeug 14 an dem Arbeitsbereich 20 vorbeibewegt, ausgeführt werden. Die für die Abarbeitung eines Arbeitstakts erforderlichen Teile sind dabei dem Regal 18, das dem jeweiligen Arbeitsbereich 20 zugeordnet ist, zu entnehmen. Eine Strecke in Förderrichtung F innerhalb des Montagebereichs 12, welche die Bedienperson von ihrem Arbeitsbereich 20 aus erreichen kann, wird als Taktlänge T bezeichnet. Ein Abstand A zwischen jedem Regal 18 und den Fahrzeugen 14 quer zu der Förderrichtung F ist idealerweise so bemessen, dass die Bedienperson sich zur Entnahme von Teilen aus dem Regal 18 bzw. zur Montage der Teile an den Fahrzeugen 14 nur umzudrehen braucht, ohne in ihrer Bewegungsfreiheit behindert zu sein.

Zur Vermeidung von Fehlgriffen bzw. Entnahmefehlern der Bedienperson bei der Entnahme von Teilen aus den Regalen 18 ist eine Überwachungseinheit 22 installiert, die einen optischen bzw. sensorischen Erfassungsbereich 22a aufweist, welcher sich in ein Raumsegment zwischen dem Regal 18 und der Bedienperson bzw. deren Arbeits- oder Aufenthaltsbereich 20 erstreckt. Die Funktionsweise der Erfassungseinheit 22 wird anhand mehrerer Ausführungsbeispiele im Folgenden näher beschrieben werden.

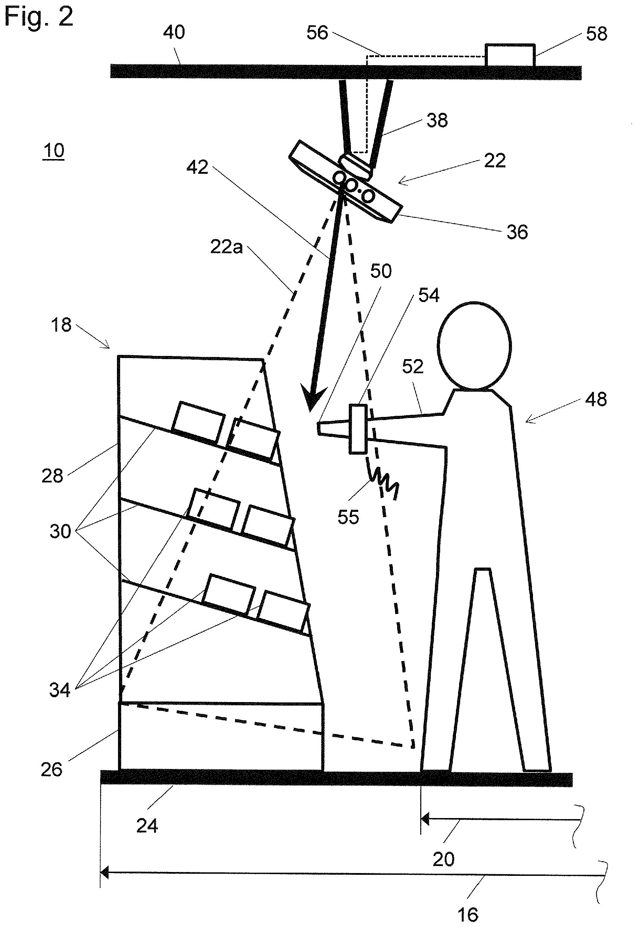

Fig. 2 zeigt in einer schematischen Seitenansicht eine Entnahmesituation an einem der Regale 18 (vgl. auch Fig. 1). Gemäß der Darstellung in Fig. 2 steht das Regal 18 auf einem Hallenboden 24 der Montagestrecke 10. Auf dem Hallenboden 24 ist der Arbeitsbereich 20 durch nicht näher dargestellte Mittel markiert, wobei der Arbeitsbereich 20 um einen vorbestimmten Abstand vor dem Regal 18 endet. Das Regal 18 weist ein Podest 26, das auf dem Hallenboden 24 steht, und einen an dem Podest 26 befestigten Rahmen 28 auf. In dem Rahmen 28 sind eine Vielzahl von Regalfächern 30 (hier: drei Regalfächer 30) angeordnet. Die Regalfächer 30 sind zum Arbeitsbereich 20 hin geneigt und enthalten jeweils mehrere Lagerbehälter 34. Die Lagerbehälter 34 werden im Sinne der vorliegenden Erfindung auch als Teileablageorte 34 bezeichnet. Sie beinhalten jeweils eine Vielzahl von Teilen einer Teileart oder ein einziges, für ein bestimmtes der Fahrzeuge 14 gemäß Auftragsspezifikation speziell vorbereitetes Teil oder mehrere verschiedene, für bestimmte der Fahrzeuge 14 entsprechend der Taktfolge bereitgestellte Teile.

Bei diesem Ausführungsbeispiel weist die Überwachungseinheit eine Infrarottiefenkamera (nachstehend: IR-Tiefenkamera) 36 auf, die mittels einer Aufhängung 38 an einer Hallendecke 40 der Montagestrecke 10 befestigt ist. Die IR-Tiefenkamera 36 ist in diesem Ausführungsbeispiel ein Kinect-Sensor mit an sich bekannten Spezifikationen. Die Überwachungseinheit 22 bzw. die IR-Tiefenkamera 36 weist eine optische Achse auf, die im Folgenden als eine Tiefenrichtung 42 bezeichnet wird. Die optische Achse (Tiefenrichtung 42) ist eine Mittelachse des Ausleuchtbereichs 22a. Wenn der Ausleuchtbereich 22a sich im Wesentlichen achsensymmetrisch um die optische Achse 42 herum erstreckt, was technisch denkbar ist, weist er in Eingriffsrichtung (d.i. eine Richtung von dem Arbeitsbereich 20 zu dem Regal 18, also eine Richtung normal zu einer Öffnungs- bzw. Eingriffsebene des Regals 18) in etwa die gleiche Ausdehnung wie in Breitenrichtung des Regals auf. In diese Fall ist durch entsprechende Ausrichtung der Tiefenkamera 36 sicherzustellen, dass der Ausleuchtbereich 22a vor dem Regal 18 nicht zu groß ist. Vorzugsweise weist der Ausleuchtbereich 22a daher in Breitenrichtung des Regals 18 eine größere Ausdehnung als in Eingriffrichtung auf. Mit anderen Worten, der Ausleuchtbereich 22a ist als ein sich um die Tiefenrichtung 42 bzw. die optische Ebene der IR-Tiefenkamera 36 erstreckendes, mehr oder weniger schmales, räumlich-keilförmiges Raumsegment ausgestaltet, das sich im Wesentlichen zwischen dem Arbeitsbereich 20 und dem Regal 18 erstreckt.

Vor einer weiteren Erläuterung der Funktionsweise und weitere Einzelheiten werden nachstehend noch zwei Abwandlungen dieses Ausführungsbeispiels beschrieben.

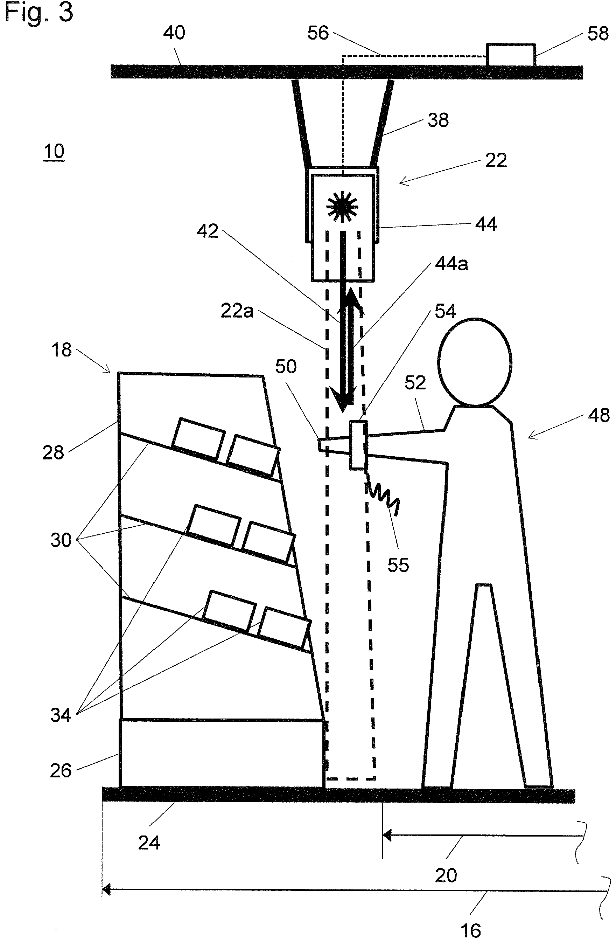

Fig. 3 zeigt eine schematische Seitenansicht einer Abwandlung des in Fig. 2 gezeigten Ausführungsbeispiels. Bei der in Fig. 3 gezeigten Abwandlung weist die Abtasteinheit 22 anstelle der IR-Tiefenkamera 36 (Fig. 2) einen Infrarot-Laserranger 44 auf, der mittels der Aufhängung 38 an der Hallendecke 40 befestigt ist. Der Laserranger 44 sendet einen Laserstrahl bzw. ein Strahlenfeld in seiner Tiefenrichtung 42 aus. Der ausgesendete Laserstrahl wird am Hallenboden oder anderen sich in seinem Weg befindlichen Gegenständen reflektiert und als Rückstrahl 44a in eine Sensorik zurückgeworfen. Im Vergleich zu der IR-Tiefenkamera 36 (Fig. 2) weist der Infrarot-Laserranger 44 einen deutlich engeren Ausleuchtbereich 22a mit nahezu parallelen Begrenzungsflächen auf.

Als Laserranger 44 hat sich beispielsweise ein Lasermess-System der Baureihe LMS 1xx der Firma Sick als geeignet herausgestellt.

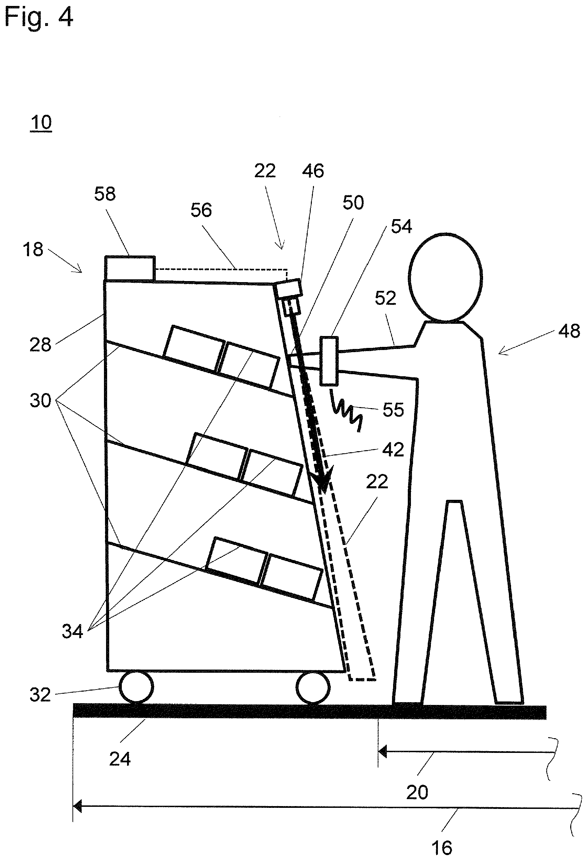

Fig. 4 zeigt in einer schematischen Seitenansicht eine weitere Abwandlung des in Fig. 2 gezeigten Ausführungsbeispiels. Bei der in Fig. 4 gezeigten Abwandlung steht das Regal 18 nicht mittels eines Podests auf dem Hallenboden 24, sondern weist Rollen 32 auf, die es ermöglichen, das Regal 18 auf dem Hallenboden 24 zu bewegen. Ferner ist anstelle eines an der Hallendecke befestigten Geräts ein Nahfeld-Laserranger 46 an einer Oberseite des Regals 18 angebracht. Der sich in Tiefenrichtung 42 des Laserrangers 46 erstreckende Ausleuchtbereich 22a deckt ein schmales Raumsegment ab, welches sich unmittelbar vor der Entnahmeebene des Regals 18 befindet.

Wie in Fign. 2 bis 4 gezeigt, hält sich eine Bedienperson 48 in dem Arbeitsbereich 20 auf und greift in der jeweils dargestellten Situation mit ihrer Hand 50 in Richtung eines der Behälter 34 in eines der Regalfächer 30 des Regals 18. Dabei dringt die Hand 50 in den Ausleuchtbereich 22a ein. Die Bedienperson 48 trägt an einem Arm 52, welcher der Hand 50 zugeordnet ist, ein Vibrationsarmband 54. In der jeweils dargestellten Situation gibt das Vibrationsarmband 54 einen Vibrationsalarm 55 aus. Es ist jedoch festzuhalten, dass das Vibrationsarmband 54 nicht ständig vibriert, sondern der Vibrationsalarm 55 insbesondere im Falle eines Entnahmefehlers, dessen Feststellung später beschrieben werden wird, ausgegeben wird. In Bezug auf Fign. 2 bis 4 sei an dieser Stelle nur angemerkt, dass die Abtasteinheit 22 (IR-Tiefenkamera 36 bzw. Infrarot-Laserranger 44 bzw. Nahfeld-Laserranger 46) mittels einer Signalleitung 56 mit einem Steuergerät 58 verbunden ist, welches unter anderem anhand einer Auswertung von Sensorsignalen bzw. optischen Signalen einen Entnahmefehler feststellt.

Bei dem in Fig. 2 gezeigten Ausführungsbeispiel und der in Fig. 3 gezeigten Abwandlung ist das Steuergerät 58 in einem Raum oberhalb der Hallendecke 40 angeordnet. Dies ist nur eine beispielhafte Anordnung, die nicht ausschließt, dass das Steuergerät 58 sich an jedem beliebigen Ort befinden kann. Das Steuergerät 58 kann dem jeweiligen Arbeitsplatz (Arbeitsbereich 20 bzw. Regal 18) spezifisch zugeordnet sein oder ein zentrales Steuergerät für viele Arbeitsbereiche 20 bzw. Regale 18 sein. Im Unterschied dazu ist bei der Abwandlung gemäß Fig. 4 das Steuergerät 58 direkt am Regal (Rollregal) 18 angeordnet und befestigt.

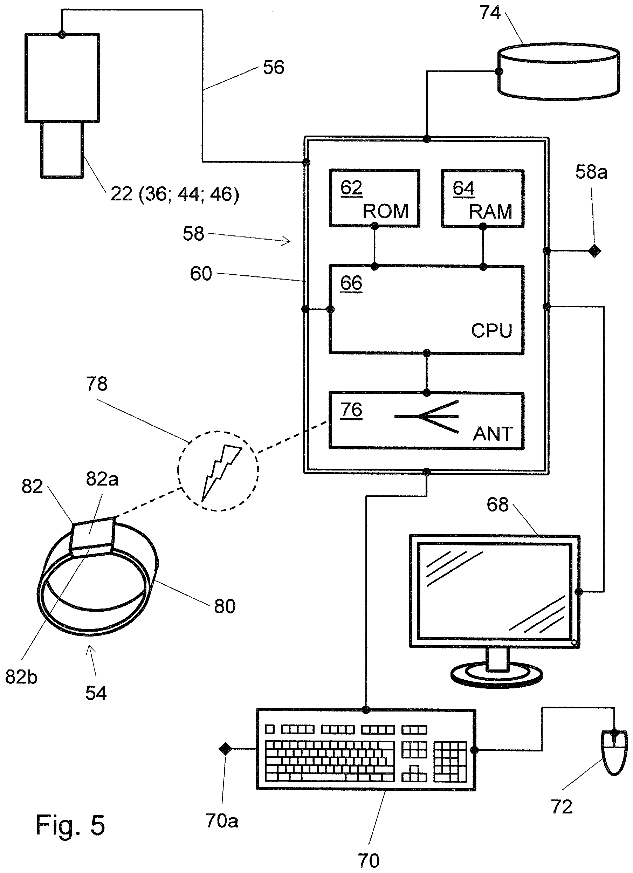

Fig. 5 zeigt eine Verschaltung und Signalwege des Steuergeräts 58 mit Peripheriegeräten, der Abtasteinheit (IR-Tiefenkamera 36 bzw. Infrarot-Laserranger 44 bzw. Nahfeld-Laserranger 46) und dem Vibrationsarmband 54 in einer schematischen Darstellung.

Gemäß der Darstellung in Fig. 5 weist das Steuergerät 58, das beispielsweise in an sich bekannter Art und Weise als Industrie-PC aufgebaut ist, einen als doppelte Linie symbolisierten Eingabe-/Ausgabe-Bus (kurz: Bus) 60, einen Festwertspeicher (ROM) 62, einen Arbeitsspeicher (RAM) 64, eine zentrale Recheneinheit (CPU) 66 und einen mit dem Bus 60 verbundenen Datenanschluss 58a auf. Die CPU 66 ist (über eine hier nicht näher dargestellte Schnittstelle) mit dem Bus 60 verbunden und intern mit dem ROM 62 und dem RAM 64 verbunden. An dem Bus 60 ist über die Signalleitung 56 die Abtasteinheit 22 (IR-Tiefenkamera 36, Infrarot-Laserranger 44, Nahfeld-Laserranger 46) sowie ein Bildschirm 68, eine Tastatur 70 und ein Massenspeicher 74 angeschlossen. An der Tastatur 70 ist ferner ein Zeigegerät (Computermaus) 72 angeschlossen, ferner weist die Tastatur 70 einen weiteren USB-Anschluss 70a zur Verbindung mit weiteren Peripheriegeräten auf. Der Massenspeicher 74 ist beispielsweise eine Festplatte. Abweichend von der Darstellung in Fig. 5 kann eine Festplatte auch intern in dem Steuergerät 58 eingebaut und über eine entsprechende Schnittstelle mit der CPU 66 verbunden sein. Der Datenanschluss 58a steht stellvertretend und beispielhaft für einen oder eine Vielzahl von Datenanschlüssen, die von jeder denkbaren Art sein können, wie beispielsweise seriell, parallel, USB, Netzwerk (CAT5, CAT6, etc.), Firewire, u.s.w.

Des Weiteren weist das Steuergerät 58 eine Funkschnittstelle (ANT) 76 auf, die mittels einer eingebauten Antennenschaltung zum Empfang und zur Aussendung von Funksignalen und somit zur Etablierung einer Funkverbindung 78 ausgebildet ist.

Für die Anwendung der vorliegenden Erfindung hat sich beispielsweise ein als PandaBoard bezeichneter Einplatinenrechner auf der Basis der Open Multimedia Application Platform (OMAP) der Baureihe 4430 oder 4460 der Firma Texas Instruments mit an sich bekannten Spezifikationen als geeignetes Steuergerät 58 herausgestellt.

Das Vibrationsarmband 54 weist ein Armband 80, beispielsweise aus Kunststoff, Metall, Textilgewebe oder dergleichen, auf. An dem Armband 80 ist eine Funktionseinheit 82 angebracht, welche eine Oberseite 82a und eine Randseite bzw. vier Randseiten 82b aufweist. Wie im Folgenden näher erläutert werden wird, weist die Funktionseinheit 82 des Vibrationsarmbands 54 eine Funkschnittstelle auf, welche ausgelegt ist, über die Funkverbindung 78 mit der Funkschnittstelle 76 des Steuergeräts 58 zu kommunizieren.

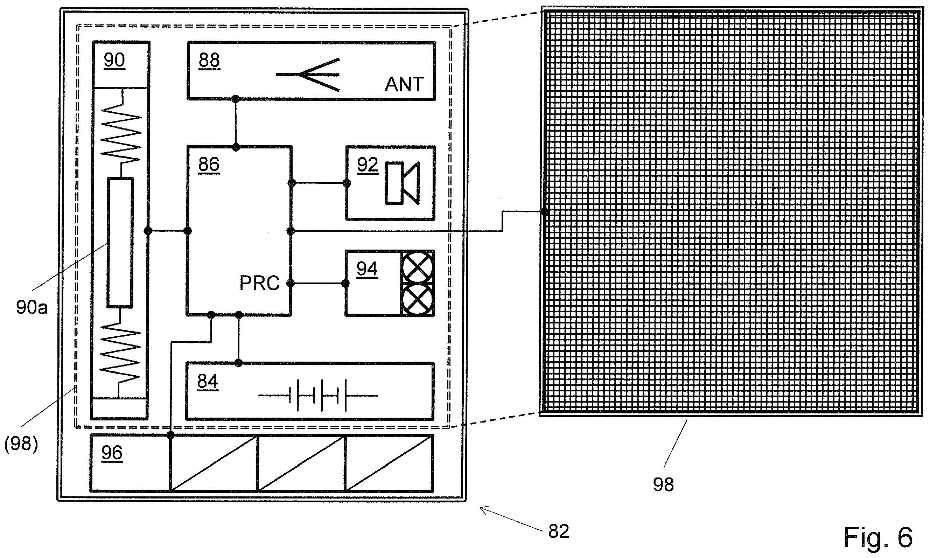

Ein innerer Aufbau der Funktionseinheit 82 des Vibrationsarmbands 54 ist in Fig. 6 schematisch dargestellt.

Gemäß der Darstellung in Fig. 6 sind in einem nicht näher bezeichneten Gehäuse der Funktionseinheit 82 eine Batterie 84, eine Verarbeitungseinheit (PRC) 86, eine Funkschnittstelle 88, ein Vibrationsmotor 90, eine Lautsprechereinheit 92, eine Leuchtanordnung 94 und eine Tastenanordnung 96 angeordnet. Die Tastenanordnung 96 ist zur Bedienung von der Oberseite 82a (Fig. 5) der Funktionseinheit 82 aus zugänglich. Alle genannten Bauelemente mit Ausnahme der Tastenanordnung 96 sind durch eine Anzeigematrix 98 abgedeckt; in Fig. 6 ist die Anzeigematrix 98 im Stil einer Explosionsdarstellung von den übrigen Bauelementen abgesetzt dargestellt bzw. ist die Lage der Anzeigematrix 98 relativ zu den übrigen Bauelementen der Funktionseinheit 82 mit einer doppelten gestrichelten Linie angedeutet. Die Verarbeitungseinheit 86 ist mit allen anderen genannten Bauelementen, gegebenenfalls über geeignete Schnittstellen (nicht näher dargestellt), verbunden. Die Batterie 84, die auch als wiederaufladbarer Akkumulator ausgebildet sein kann, ist ausgebildet, um die Verarbeitungseinheit 86 und gegebenenfalls andere Bauelemente mit elektrischer Energie zu versorgen. In der dargestellten Ausführungsform ist die Batterie 84 nur mit der Verarbeitungseinheit 86 verbunden. D.h., alle anderen Bauelemente erhalten, soweit erforderlich, elektrische Betriebsenergie über ihre Verbindung mit der Verarbeitungseinheit 86. Alternativ kann auch vorgesehen sein, dass verschiedene Bauelemente der Funktionseinheit 82 mit der Batterie 84 verbunden sind und mit der Verarbeitungseinheit 86 nur Signale austauschen. Die Funkschnittstelle 88 ist ausgebildet, um mit der Funkschnittstelle 76 des Steuergeräts 58 über die Funkverbindung 78 zu kommunizieren (vgl. Fig. 5). Der Vibrationsmotor 90 weist eine schwingend aufgehängte Masse 90a auf, die über eine nicht näher dargestellte Antriebseinrichtung beispielsweise magnetisch oder piezoelektrisch anregbar ist. Die dadurch hervorgerufenen Schwingungen der Masse 90a werden als Vibrationen auf das Gehäuse der Funktionseinheit 82 übertragen und sind daher von der das Vibrationsarmband 54 tragenden Bedienperson 48 (Fign. 1 bis 4) wahrnehmbar. Die Lautsprechereinheit 92 ist ausgebildet, um auf Ansteuerung durch die Verarbeitungseinheit 86 hin ein akustisches Signal auszugeben. Die Leuchtanordnung 94 ist ausgebildet, um auf Ansteuerung durch die Verarbeitungseinheit 86 hin optische Signale über eine oder eine Mehrzahl von Leuchten (nicht näher bezeichnet) auszugeben. Die Tastenanordnung 96 ist ausgebildet, um an ihr ausgeführte Bedienvorgänge als Signale an die Verarbeitungseinheit weiterzuleiten. Die Anzeigematrix 98 ist ausgebildet, um auf Ansteuerung durch die Verarbeitungseinheit 86 hin alphanumerische oder graphische Darstellungen anzuzeigen. In der vorliegenden Ausführungsform ist es vorgesehen, dass die Leuchten der Leuchtanordnung 94 in Randseiten 82b der Funktionseinheit 82 (vgl. Fig. 5) angeordnet sind. Alternativ können die Leuchten der Leuchtanordnung 94 auch in den Tasten der Tastenanordnung 96 integriert sein oder als Kranz um die Anzeigematrix 98 herum oder als Leuchtpunkte neben der Tastenanordnung 96 oder an beliebiger anderer Stelle der Funktionseinheit 82. In einer weiteren Abwandlung ist es auch denkbar, das Armband 80 des Vibrationsarmbandes 54 mit einem Leuchtmittel zu versehen, welches auf Anregung durch die Verarbeitungseinheit 86 aufleuchtet.

Für die Anwendung der vorliegenden Erfindung hat sich beispielsweise das Wireless-Entwicklungssystem EZ430-Chronos der Firma Texas Instruments mit an sich bekannten Spezifikationen - nach Erweiterung um den Vibrationsmotor 90 - als geeignetes Vibrationsarmband 54 herausgestellt. Das EZ430-System wurde im Design einer Sportuhr entwickelt und weist mehrere eingebaute Sensoren auf. Darüber hinaus ist das System an neue Funktionen anpassbar, ist über Funk mit weiteren Sensoren und Zubehör vernetzbar und über eine - ebenfalls drahtlose - USB-Schnittstelle an einem Computer anschließbar. Das System arbeitet standardmäßig mit einem TI-CC 430 Microcontroller vom Typ CC430F6137, der mit einer Taktfrequenz von 27 MHz arbeitet und einen Flashspeicher von 32 KByte sowie einen RAM von 4 KByte aufweist. Das System ist mit drei Funkfrequenzen, nämlich 433 MHz für weltweiten Einsatz, 868 MHz insbesondere für Europa und Indien oder 915 MHz insbesondere für Nord- und Südamerika, am Markt verfügbar.

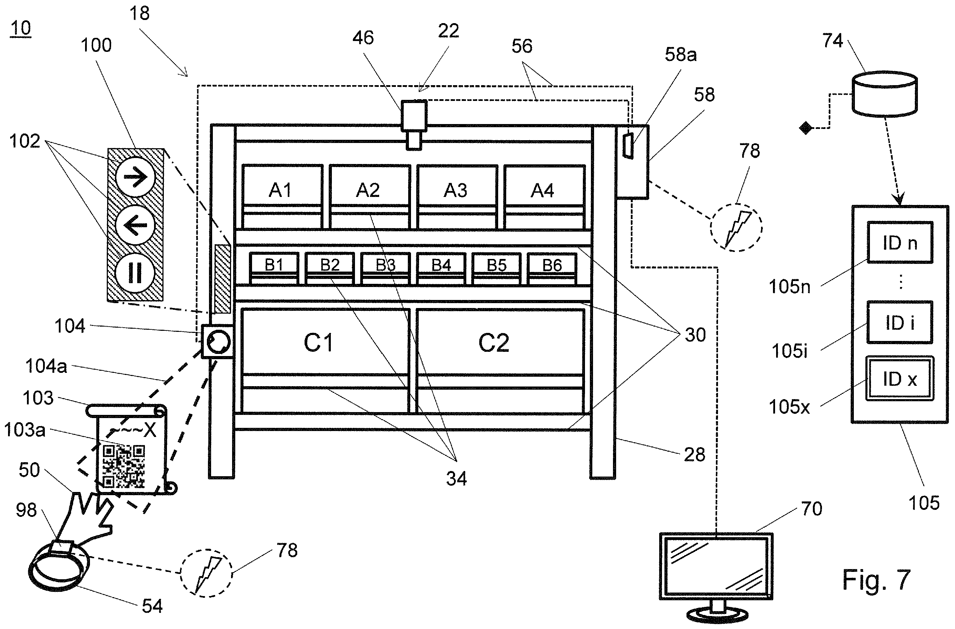

Fig. 7 zeigt eine Ausführungsvariante des Regals 18 der Montagestrecke 10 von einer Zugriffsseite des Regals 18 her gesehen. Das Regal 18 ist eine Ausführungsvariante der in Fig. 4 gezeigten Abwandlung, wobei das Regal 18 in dieser Ausführungsvariante keine Rollen aufweist, sondern mit seinem Rahmen 28 direkt auf dem hier nicht näher dargestellten Hallenboden ruht. Soweit in Fig. 7 Elemente aus vorangegangenen Figuren (insbesondere Fign. 4 und 5) dargestellt sind, kann hinsichtlich ihres Aufbaus und ihrer Funktion vollumfänglich auf die vorstehenden Ausführungen verwiesen werden. Im Folgenden werden nur diejenigen Elemente beschrieben werden, die in Fig. 7 neu hinzugekommen sind oder deren zusätzliche Wirkungsweisen und Zusammenhänge in Fig. 7 erstmals verdeutlicht sind.

Gemäß der Darstellung in Fig. 7 ist an dem Rahmen 28 des Regals 18 eine Zone definiert, die als aktive Kleinzone 100 bezeichnet wird. Die aktive Kleinzone 100 wird durch den Laserranger 46 gesondert überwacht. Die aktive Kleinzone 100 weist mehrere Aufkleber 102 auf, die mit allgemeinverständlichen Symbolen zur Auftragssteuerung, wie etwa Auftragsbeginn oder -ende, nächster Auftrag, vorheriger Auftrag, Teilequittierung, Bestätigung, Deaktivierung der Entnahmeüberwachung z. B. bei Leergutentnahme etc., versehen sind. Wenn die Bedienperson ihre Hand 50 auf einen der Aufkleber 102 der aktiven Zone 100 legt, wird dies durch den Laserranger 46 erfasst und durch das Steuergerät 58 als manuelle Eingabe interpretiert. Da die Überwachung der aktiven Zone 100 über den Laserranger 46 erfolgt, ist für manuelle Eingaben (Quittierung etc.) keine zusätzliche Hardware-Installation am Regal 18 erforderlich. Mit anderen Worten, an dem Regal 18 sind manuelle Eingaben per Gestensteuerung möglich, wodurch weitere Hardware (Taster etc.) an dem Regal 18 entbehrlich sind. Die aktive Kleinzone 100 kann auch als virtuelle Zone bezeichnet werden. Es können auch mehrere solcher virtueller Zonen eingerichtet sein. Solche virtuellen Zonen können auch als Zonen umschrieben werden, denen durch Touchfunktionalität Aktionen in der überwachten Zone zugeordnet werden können.

Im Bereich der aktiven Kleinzone 100 ist auch ein Laser-Scanner 104 an dem Rahmen 28 des Regals 18 angeordnet. Der Laser-Scanner 104 weist einen Ausleuchtbereich 104a auf und ist ausgebildet, um Datencodes wie etwa Strichcodes oder Pixelcodes (sogenannte zweidimensionale Strichcodes) zu erfassen und den darin enthaltenen Informationsgehalt zu decodieren. Der Laser-Scanner 104 ist über eine weitere Datenleitung 56 mit dem Steuergerät 58 verbunden. In einer Ausführungsalternative kann der Laser-Scanner 104 auch mobil ausgebildet sein. Es versteht sich, dass Einrichtungen (Modul, Software) zum Decodieren von Datencodes, die durch den Laser-Scanner 104 erfasst werden, auch in das Steuergerät 58 ausgelagert sein können.

In Fig. 7 ist eine Situation gezeigt, in welcher die Bedienperson ein schriftliches Auftragsdokument 103, das neben einer schriftlichen Darstellung des Auftrags, an der sich die Bedienperson orientieren kann, einen zweidimensionalen Datencode 103a aufweist, in den Ausleuchtbereich 104a des Laser-Scanners 104 hält. Das Auftragsdokument beschreibe ohne Beschränkung der Allgemeinheit einen Auftrag x. Sobald der Datencode 103a durch den Laser-Scanner 104 vollständig erfasst, an das Steuergerät 58 weitergeleitet und durch das Steuergerät 58 interpretiert wurde, wird der Auftrag x als Auftragsdatensatz 105x mit einer Identifizierungskennung IDx versehen und in eine Auftragswarteschlange 105, die in dem Massenspeicher 74 abgelegt ist und durch das Steuergerät 58 verwaltet wird, eingereiht. Gemäß der Darstellung in Fig. 7 weist die Auftragswarteschlange 105 eine Mehrzahl von Auftragsdatensätzen (kurz: Aufträgen) 105i bis 105n mit den Auftragskennungen IDi bis IDn neben dem gerade eingelesenen Auftrag 105x (IDx) auf. Die Auftragswarteschlange 105 ist durch das Steuergerät 58 auf dem Bildschirm 68 darstellbar und durch die Bedienperson gegebenenfalls über ein Menü zugreifbar.

Neben dem manuellen Einlesen von schriftlichen Auftragsdokumenten 103 über den Laser-Scanner 104 ist es selbstverständlich auch denkbar, dass das Steuergerät 58 Aufträge (beispielsweise die Aufträge 105i bis 105n) über eine nicht näher dargestellte Netzwerkschnittstelle von einer zentralen Steuerungsinstanz, etwa über ein Warenwirtschaftssystem oder dergleichen, erhält.

In der Darstellung in Fig. 7 ist der Auftrag 105x in der Auftragswarteschlange 105 mit einer doppelten Linie gekennzeichnet, was hier symbolisiert, dass dieser Auftrag 105x als aktueller Auftrag aktiviert ist. Mit anderen Worten, das Einlesen des Auftrags über den Laser-Scanner 104 kann diesen soeben eingelesenen Auftrag selbsttätig sofort als aktuellen Auftrag aktivieren. Es ist selbstverständlich auch denkbar, mehrere Aufträge über den Laser-Scanner 104 einzulesen und danach erst einen der Aufträge in der Auftragswarteschlange 105 über die Navigationspunkte (Aufkleber 102) der aktiven Kleinzone 100 auszuwählen und manuell zu aktivieren.

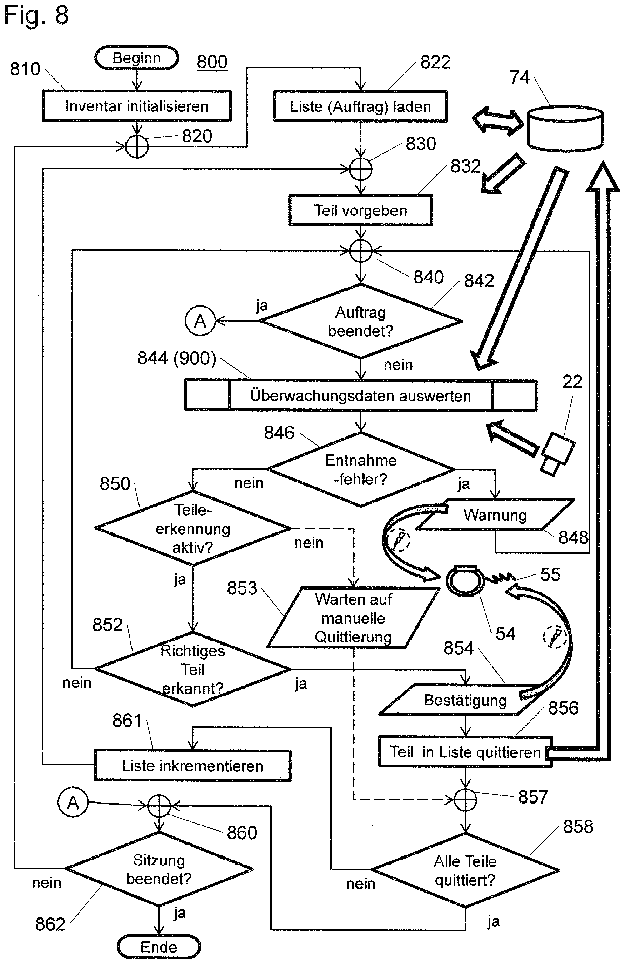

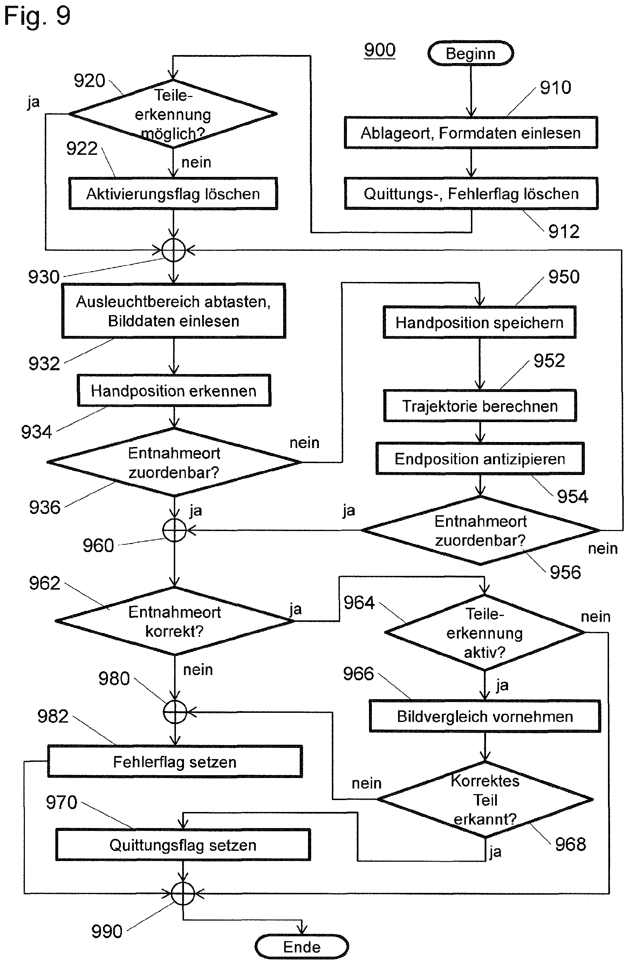

Im Folgenden wird ein Verfahren zur Überwachung einer Teileentnahme aus dem Regal 18 anhand der Fign. 8 und 9 als ein Ausführungsbeispiel der vorliegenden Erfindung anhand einzelner Prozess- bzw. Verfahrensschritte näher erläutert werden. Dabei zeigt Fig. 8 in einer Gesamtansicht einen Überwachungsprozess 800 und zeigt Fig. 9 einen Datenauswertungsprozess, der einen Prozessschritt 844 in Fig. 8 entspricht. Es ist anzumerken, dass hier und im Folgenden im Wesentlichen auf die Darstellung des Regals in Fig. 7 zurückgegriffen wird; die Beschreibung der Verfahrens- bzw. Prozessschritte ist jedoch für andere Ausführungsbeispiele und - varianten ebenso gültig.

Gemäß der Darstellung in Fig. 8 wird nach Aufruf des Prozesses 800 in einem Schritt 810 das Inventar des Regals 18 initialisiert. Zur Initialisierung des Inventars ist zunächst die Lage der jeweiligen Teileablageorte (Behälter) 34 in dem Regal 18 zu definieren. Gemäß der Darstellung in Fig. 7 weist das Regal 18 drei Regalfächer 30 auf, die von oben nach unten mit den Buchstaben A, B, C charakterisiert sind. In dem oberen Regal befinden sich vier Behälter 34, die von links nach rechts durchnummeriert sind und somit die Bezeichnungen A1, ..., A4 aufweisen. In dem zweiten Regalfach 30 befinden sich sechs Behälter 34, die von links nach rechts durchnummeriert sind und somit die Bezeichnungen B1, ..., B6 aufweisen. In dem unteren Regalfach 30 befinden sind zwei Behälter 34, die von links nach rechts durchnummeriert sind und somit die Bezeichnungen C1, C2 aufweisen. Es ist denkbar, dass die Lage, d.h. die Koordinaten in einer Ebene, bezüglich eines beliebigen Ursprungs, der beispielsweise als die linke obere Ecke des Regals 18 oder als die Montageposition des Laserrangers 46 definiert sein kann, für das Regal 18 fest vorgegeben und als Datensatz in dem Massenspeicher 74 oder einem Festwertspeicher in dem Steuergerät 58 abgelegt ist. Es ist auch denkbar, dass die Steuereinheit 58 anhand von sensorisch ermittelten oder manuell eingegebenen Rasthöhen der Regalfächer 30 die jeweilige lichte Höhe der Regalfächer 30 errechnet und aus der lichten Höhe der Regalfächer 30 und vorgegebenen Normgrößen von Behältern 34 die Anzahl und die Koordinaten der in dem jeweiligen Regalfach 30 unterbringbaren Behälter 34 und somit mögliche Ablageorte errechnet. In einer weiteren Abwandlung ist es vorgesehen, dass die Bedienperson mit ihrer Hand 50 oder einem geeigneten Zeigegerät die Kontur jedes Behälters 34 in dem Regal 18 nachzeichnet, dieses Nachzeichnen durch den Laserranger 46 erfasst wird und das Steuergerät 58 hieraus die Koordinatenmatrix für die Behälter A1 bis C2 selbsttätig berechnet.

Die eigentliche Initialisierung des Inventars kann automatisch über das Warenwirtschaftssystem oder ein Logistiksystem erfolgen. In einer Ausführungsvariante ist vorgesehen, dass jedem Behälter 34 ein Zettel oder eine Karte beiliegt, auf welchem das in dem jeweiligen Behälter 34 befindliche Teil oder die darin befindliche Teileart kodiert ist, und die Bedienperson für jeden Behälter 34 die jeweilige Karte durch den Laser-Scanner 104 abtasten lässt und somit Behälter 34 für Behälter 34 das Teileinventar des Regals 18 initialisiert.

Nach dem Schritt 810 führt der Prozess über eine Vereinigungsstelle 820, die weiter unten näher zu erläutern sein wird, zu einem Schritt 822, in welchem eine Liste der im Rahmen eines Auftrags (z. B. 103x) aus dem Regal 18 zu entnehmenden Teile geladen wird. Das Laden der Auftragsliste in Schritt 822 entspricht der Aktivierung eines Auftrags aus der Auftragsliste 105 in dem Massenspeicher 74.

Danach verläuft der Prozess über eine weitere Vereinigungsstelle 830, die weiter unten näher zu erläutern sein wird, zu einem Schritt 832, in welchem ein zu entnehmendes Teil aus der in dem Massenspeicher 74 abgelegten Auftragsliste vorgegeben wird. Das Vorgeben des Teils in 832 ist nicht notwendigerweise auf ein einziges Teil beschränkt, sondern kann sich auf eine Mehrzahl von Teilen aus der Auftragsliste beziehen. Dies hängt unter anderem davon ab, ob die Auftragsliste sequenziell oder nicht sequenziell abzuarbeiten ist. Danach führt der Prozess über eine weitere Vereinigungsstelle 840, die weiter unten näher zu erläutern sein wird, zu einem Schritt 842, in welchem beurteilt wird, ob der Auftrag beendet wurde. Eine Beendigung des Auftrags kann beispielsweise manuell über eine Eingabe an Tastatur oder Maus, an der aktiven Kleinzone 100 oder an dem Vibrationsarmband 54 durch die Bedienperson vorgenommen werden. Eine Beendigung des Auftrags kann aber auch durch eine übergeordnete Instanz aus betrieblichen oder sonstigen Gründen angeordnet werden. Falls die Beurteilung in Schritt 842 positiv ist, d.h. wenn festgestellt wurde, dass der Auftrag beendet wurde, springt der Prozess zu einer weiteren Vereinigungsstelle 860, die einen Endpunkt einer Bearbeitung des aktiven Auftrags markiert und weiter unten näher zu erläutern sein wird, um die Bearbeitung des aktiven Auftrags zu verlassen.

Falls die Beurteilung in Schritt 842 negativ ist, d.h., wenn in Schritt 842 beurteilt wird, dass der Auftrag nicht beendet wurde, wird der Prozess mit einem Schritt 844 fortgesetzt, in welchem Überwachungsdaten, die durch die Abtasteinheit 22 geliefert werden, anhand von Daten, insbesondere des Teileinventars, die in dem Massenspeicher 74 bereitgestellt werden, ausgewertet werden. Der Auswertungsschritt 844 ruft einen eigenen Teilprozess 900, der in Fig. 9 im Einzelnen dargestellt ist und später erläutert werden wird, auf. Hier ist zunächst festzuhalten, dass der Auswertungsschritt 844 dem Teilprozess 900 ein Erkennungsaktivierungsflag (kurz: Aktivierungsflag) übergibt und der Teilprozess 900 das Aktivierungsflag sowie ein Fehlerflag und ein Quittungsflag zurückgibt. Als ein Flag wird dabei eine Variable verstanden, welche die Werte 0 oder 1 annehmen kann, wobei der Wert 1 einem gesetzten Zustand und der Wert 0 einem nicht gesetzten Zustand des Flags entspricht. Das Aktivierungsflag kann in Abhängigkeit von dem Auftrag oder von dem vorgegebenen Teil vorab gesetzt werden. Das Setzen oder Nichtsetzen (gegebenenfalls Löschen) des Aktivierungsflags kann Bestandteil des Schritts 822 und/oder des Schritts 832 sein. Das Fehlerflag wird durch den Schritt 844 als gesetzt geliefert, wenn in dem Teilprozess 900 ein Entnahmefehler erkannt wird. Das Quittungsflag wird durch den Schritt 844 als gesetzt geliefert, wenn in dem Teilprozess 900 festgestellt wurde, dass ein korrektes vorgegebenes Teil aus dem Regal 18 entnommen wurde.

Nach Rücksprung aus dem Teilprozess 900 führt der Prozess weiter zu einem Schritt 846, in welchem beurteilt wird, ob ein Entnahmefehler vorliegt oder nicht. Die Beurteilung in Schritt 846 wird anhand des Zustands des Fehlerflags vorgenommen. D.h., wenn der Schritt 844 das Fehlerflag als gesetzt geliefert hat, wird beurteilt, dass ein Entnahmefehler vorliegt, anderenfalls wir beurteilt, dass kein Entnahmefehler vorliegt.

Falls die Beurteilung in Schritt 846 positiv ist, d.h., wenn in Schritt 846 beurteilt wird, dass ein Entnahmefehler vorliegt, führt der Prozess zu einem Schritt 848, in welchem eine Warnung ausgegeben wird. Das Ausgeben einer Warnung in Schritt 848 bedeutet, dass über die Funkschnittstelle 76 des Steuergeräts 58 das Vibrationsarmband 54 derart aktiviert wird, dass dieses den Vibrationsmotor aktiviert. Gleichzeitig können auch akustische und/oder optische Warnungen am Vibrationsarmband 54 ausgegeben werden. Nach Ausgeben der Warnung in Schritt 848 springt der Prozess zurück zu der Vereinigungsstelle 840, um die Schritte 842 bis 846 und gegebenenfalls 848 erneut zu durchlaufen.

Falls die Beurteilung in Schritt 846 negativ ist, d.h., wenn in Schritt 846 beurteilt wird, dass kein Entnahmefehler vorliegt, wird der Prozess mit einem Schritt 850 fortgesetzt, in welchem beurteilt wird, ob eine Teileerkennung aktiv ist oder nicht. Ob die Teileerkennung aktiv ist oder nicht, kann beispielsweise anhand eines Zustands des Aktivierungsflags beurteilt werden.

Falls die Beurteilung in Schritt 850 positiv ist, d.h. wenn in Schritt 850 beurteilt wird, dass die Teileerkennung aktiv ist, fährt der Prozess zu Schritt 852 fort, in welchem beurteilt wird, ob im Rahmen der Teileerkennung ein richtiges Teil als entnommen erkannt wurde oder nicht. Diese Beurteilung wird beispielsweise auf der Grundlage des Zustands des Quittungsflags vorgenommen. Falls die Beurteilung in Schritt 852 negativ ist, d.h., wenn in Schritt 852 beurteilt wird, dass kein richtiges Teil als entnommen erkannt wurde, springt der Prozess zurück zu der Vereinigungsstelle 840, um die Schritte 842 bis 846 und gegebenenfalls weitere Schritte erneut zu durchlaufen. Es ist in diesem Zusammenhang darauf hinzuweisen, dass dann, wenn kein richtiges Teil erkannt wurde, nicht unbedingt ein Entnahmefehler vorliegen muss, und daher in diesem Zweig der Verarbeitung keine Warnung ausgegeben werden muss. Falls im Rahmen der Teileerkennung ein falsches Teil als entnommen erkannt wurde, führt dies zur Ausgabe des Fehlerflags und damit zur Feststellung eines Entnahmefehlers in Schritt 846, woraufhin ohnehin eine Warnung ausgegeben wird.

Falls die Beurteilung in Schritt 852 positiv ist, d.h., falls in Schritt 852 beurteilt wird, dass im Rahmen der Teileerkennung ein richtiges Teil als entnommen erkannt wurde, verzweigt der Prozess zu einem Schritt 854, in welchem eine Bestätigung ausgegeben wird. Die Ausgabe einer Bestätigung ist ähnlich der Ausgabe einer Warnung in Schritt 848 mit dem Unterschied, dass die Aktivierung des Vibrationsarmbandes auf andere Weise geschieht als im Falle einer Warnung. Beispielsweise kann eine Bestätigung durch eine kurze Vibration 55 gekennzeichnet sein, während eine Warnung durch eine längere, gegebenenfalls intermittierende Vibration 55 gekennzeichnet ist. Auch die Bestätigung kann durch entsprechende optische und/oder akustische Signalisierung unterstützt werden.

Nach der Bestätigung in Schritt 854 wird in einem weiteren Schritt 856 das erkannte Teil in der Auftragsliste selbsttätig quittiert. Während bei nicht aktiver Teileerkennung oder bei Entnahme eines Teils, für welches die Teileerkennung nicht greift (z.B. eines Kleinteils), die Bedienperson die Entnahme des Teils manuell zu quittieren hat, wofür Eingabeelemente des Steuergeräts 58 wie etwa Tastatur oder Maus oder auch die aktive Kleinzone 100 zur Verfügung stehen, kann der Bedienperson in dem Fall, dass das richtige Teil im Rahmen der Teileerkennung erkannt wurde, dieser Arbeitsschritt abgenommen werden, was die Arbeit zusätzlich erleichtert und den Takt beschleunigt. Nach Quittierung des Teils in Schritt 856 schreitet der Prozess über eine Vereinigungsstelle 857, die weiter unten zu erläutern sein wird, zu einem Schritt 858 fort, in welchem beurteilt wird, ob bereits alle Teile des aktiven Auftrags quittiert wurden. Hierzu greift der Schritt 858 auf die Auftragsliste in dem Massenspeicher 74 zu. Falls die Beurteilung in Schritt 858 positiv ist, d.h., wenn in Schritt 858 beurteilt wird, dass bereits alle Teile quittiert worden sind, wird die Bearbeitung des aktiven Auftrags beendet, indem der Prozess zu der Vereinigungsstelle 860 führt. Falls die Beurteilung in Schritt 858 negativ ist, d.h., falls in Schritt 858 beurteilt wird, dass noch nicht alle Teile quittiert worden sind, wird in einem weiteren Schritt 861 die Auftragsliste inkrementiert, und die Verarbeitung des Prozesses springt zurück zu der Vereinigungsstelle 830, um ein neues Teil in Schritt 832 vorzugeben und die ab der Vereinigungsstelle 840 beginnende Überwachungsschleife zu beginnen.

Falls die Beurteilung in Schritt 850 negativ ist, d.h., wenn in Schritt 850 beurteilt wird, dass die Teileerkennung nicht aktiv ist, wartet der Prozess in einem Schritt 853 auf eine manuelle Quittierung der Teileentnahme, um daraufhin zu der Vereinigungsstelle 857 zu leiten. In der Vereinigungsstelle 857 läuft der negative Zweig von Schritt 850 mit dem positiven Zweig von Schritt 850 (bei korrekter Teileerkennung) zusammen, um den Prozess gemäß vorstehender Beschreibung mit Schritt 858 fortzusetzen.

Die Vereinigungsstelle 860 entspricht, wie bereits erwähnt, einem Endpunkt der Bearbeitung des aktiven Auftrags. Die Vereinigungsstelle 860 wird entweder erreicht, wenn der Auftrag innerhalb der Überwachungsschleife beendet wurde oder wenn alle Teile in der Auftragsliste quittiert wurden. Nach der Vereinigungsstelle 860 wird in einem weiteren Schritt 862 beurteilt, ob die Sitzung beendet wurde. Als Sitzung wird hierbei z. B. ein Arbeitszeitabschnitt verstanden, in welchem sich eine Bedienperson innerhalb des Arbeitsbereichs 20 des Regals 18 aufhält und für entsprechende Montagearbeiten bereit ist. Eine Beendigung der Sitzung kann durch die Bedienperson auf manuelle Weise wie bereits beschrieben vorgenommen werden, kann aber auch durch eine übergeordnete Instanz vorgeschrieben werden. Falls die Beurteilung in Schritt 862 negativ ist, d.h., falls in Schritt 862 beurteilt wird, dass die Sitzung nicht beendet wurde, springt der Prozess zurück zu der Vereinigungsstelle 820, um daraufhin eine neue Auftragsliste in Schritt 822 zu laden und die Auftragsbearbeitung beginnend mit der Vereinigungsstelle 830 durchzuführen.

Falls die Beurteilung in Schritt 862 positiv ist, d.h., falls in Schritt 862 beurteilt wird, dass die Sitzung beendet wurde, endet der Prozess 800.

Nun wird anhand der Fig. 9 der Ablauf des Teilprozesses 900 (Datenauswertungsprozesses), der in Schritt 844 des übergeordneten Überwachungsprozesses 800 aufgerufen wird, näher erläutert. Dabei wird davon ausgegangen, dass das Erkennungsaktivierungsflag (Aktivierungsflag) bei Aufruf des Teilprozesses 900 übergeben wird.

Gemäß der Darstellung in Fig. 9 werden nach Aufruf des Teilprozesses 900 zunächst in einem Schritt 910 ein Ablageort und Formdaten für das vorgegebene Teil aus dem Teileinventar, das in dem Massenspeicher 74 abgelegt ist, eingelesen. Es versteht sich, dass Ablageort und Formdaten auch mit Aufruf des Teilprozesses 900 übergeben werden können. Anschließend werden in einem Schritt 912 das Quittungs- und das Fehlerflag gelöscht.

Danach wird in einem Schritt 920 beurteilt, ob eine Teileerkennung möglich ist. Eine Teileerkennung kann beispielsweise unmöglich sein, wenn keine Formdaten einlesbar sind. Falls die Beurteilung in Schritt 920 negativ ist, d.h., wenn in Schritt 920 beurteilt wird, dass eine Teileerkennung nicht möglich ist, wird in Schritt 922 das Aktivierungsflag gelöscht, und die Verarbeitung schreitet zu einem Vereinigungspunkt 930 fort, welcher den Beginn einer Abtastschleife markiert.

Falls die Beurteilung in Schritt 920 positiv ist, d.h., falls in Schritt 920 beurteilt wird, dass eine Teileerkennung möglich ist, wird der Schritt 922 übersprungen, und die Verarbeitung verzweigt unmittelbar zu der Vereinigungsstelle 930. Es ist darauf hinzuweisen, dass auch dann, wenn in Schritt 920 beurteilt wird, dass eine Teileerkennung möglich ist, das Aktivierungsflag zwar nicht gelöscht wird, aber ungesetzt bleibt, wenn es als nicht gesetzt übergeben wird.

Nach der Vereinigungsstelle 930 wird in einem Schritt 932 der Ausleuchtbereich 22a durch die Abtasteinheit 22 abgetastet und werden die von dieser ausgegebenen Bilddaten durch das Steuergerät 58 eingelesen.

Danach wird in einem Schritt 934 versucht, eine Handposition zu erkennen. Es versteht sich, dass eine Handposition nur dann erkannt wird, wenn sich die Hand 50 in dem Ausleuchtbereich 22a befindet. Durch eine Bilderkennung kann ausgeschlossen werden, dass ein anderer Gegenstand fälschlich als die Hand 50 der Bedienperson 48 erkannt wird. Demzufolge ist der Schritt 934 als Aufruf eines weiteren Teilprozesses oder zumindest als gegebenenfalls mehrfach durchlaufene Schleife, die erst beendet wird, wenn eine Handposition erkannt wurde, zu verstehen. Ein solcher Teilprozess oder eine solche Schleife kann auch eine Ausstiegsbedingung enthalten, die den Schritt 934 ohne Erkennung einer Handposition verlässt.

Nach dem Schritt 934 wird in einem Schritt 936 beurteilt, ob der Handposition ein Entnahmeort 34 innerhalb des Regals 18 zuordenbar ist. Das bedeutet, dass in Schritt 936 ein Vergleich zwischen Koordinaten der Handposition und dem gespeicherten Koordinatendatensätzen der Ablageorte 34 erfolgt und festgestellt wird, ob die Handposition eindeutig in einen Koordinatenbereich eines der Behälter A1 bis C2 fällt oder nicht. Falls die Beurteilung in Schritt 936 positiv ist, d.h., falls in Schritt 936 beurteilt wird, dass der Handposition ein eindeutiger Entnahmeort zuordenbar ist, verzweigt die Verarbeitung zu einem Vereinigungspunkt 960, der das Ende einer Abtastschleife in dem Teilprozess 900 markiert.

Falls die Beurteilung in Schritt 936 negativ ist, d.h., falls in Schritt 936 beurteilt wird, dass die in Schritt 934 erkannte Handposition keinem Entnahmeort zuordenbar ist, verzweigt die Verarbeitung zu einem Schritt 950, in welchem die in Schritt 934 erkannte Handposition gespeichert wird. Es ist zu verstehen, dass die Handposition bei jedem Durchlaufen des Schritts 950 gespeichert wird, ohne die bei einem oder mehreren vorherigen Durchläufen des Schritts 950 gespeicherten Handpositionen zu löschen. Allerdings kann die Anzahl der gespeicherten Handpositionen in geeigneter Weise begrenzt sein. D.h., es ist eine Speicherung einer Abfolge von Handpositionen vorgesehen. Aus den gespeicherten Handpositionen wird in einem anschließenden Schritt 952 eine Trajektorie berechnet. Unter der Trajektorie wird der bisherige Verlauf bzw. die Spur der Hand im Raum (d.h., innerhalb des Ausleuchtbereichs 22a) berechnet. Anschließend wird in einem Schritt 974 eine Endposition der Hand antizipiert, indem eine Extrapolation der Trajektorie berechnet wird. Dabei wird die Trajektorie so weit extrapoliert, bis die extrapolierte Trajektorie auf eine Entnahmeebene des Regals 18 trifft. Dabei kann auch ein gewisser Streubereich, der mögliche Richtungsänderungen der Hand berücksichtigt, zugelassen werden.

In einem anschließenden Schritt 956 wird beurteilt, ob der extrapolierten Trajektorie ein Entnahmeort zuordenbar ist oder nicht. D.h., es wird beurteilt, ob die extrapolierte Trajektorie eindeutig oder mit hinreichender Wahrscheinlichkeit in einem der Behälter A1 bis C2 endet. Falls die Beurteilung in Schritt 956 positiv ist, d.h., falls in Schritt 956 beurteilt wird, dass der extrapolierten Trajektorie ein Entnahmeort mit hinreichender Wahrscheinlichkeit zuordenbar ist, verzweigt die Verarbeitung zu dem Vereinigungspunkt 960. Falls die Beurteilung in Schritt 956 negativ ist, d.h., falls in Schritt 956 beurteilt wird, dass der extrapolierten Trajektorie ein Entnahmeort nicht mit hinreichender Wahrscheinlichkeit zuordenbar ist, springt die Verarbeitung zurück zum Beginn der Abtastschleife in dem Vereinigungspunkt 930.

Nach Passieren des Vereinigungspunkts 960 führt die Verarbeitung zu einem Schritt 962, in welchem beurteilt wird, ob der Entnahmeort korrekt war. D.h., in Schritt 962 wird auf der Grundlage des vorgegebenen Teils und des in dem Teileinventar gespeicherten Ablageorts des vorgegebenen Teils beurteilt, ob der in Schritt 936 oder Schritt 976 zugeordnete Entnahmeort der Ablageort des vorgegebenen Teils ist oder nicht. Falls die Beurteilung in Schritt 962 positiv ist, d.h., falls in Schritt 962 beurteilt wird, dass der Entnahmeort korrekt ist, verzweigt die Verarbeitung zu einem Schritt 964, in welchem beurteilt wird, ob die Teileerkennung aktiv ist oder nicht. D.h., in Schritt 964 wird beurteilt, ob das Aktivierungsflag gesetzt ist oder nicht. Falls die Beurteilung in Schritt 964 negativ ist, d.h., falls in Schritt 964 beurteilt wird, dass die Teileerkennung nicht aktiv ist, verzweigt die Verarbeitung zu einem Vereinigungspunkt 990, von welchem aus der Teilprozess 900 beendet wird, d.h., der Rücksprung zum aufrufenden Prozess eingeleitet wird.

Falls die Beurteilung in Schritt 964 positiv ist, d.h., falls in Schritt 964 beurteilt wird, dass die Teileerkennung aktiv ist, verzweigt die Verarbeitung zu Schritt 966, in welchem ein Bildvergleich vorgenommen wird. D.h., in Schritt 966 wird der in Schritt 932 eingelesene Bilddatensatz mit den in Schritt 910 eingelesenen Formdaten für das vorgegebene Teil verglichen. In dem anschließenden Schritt 968 wird beurteilt, ob ein korrektes Teil erkannt wurde oder nicht. D.h., in Schritt 968 wird beurteilt, ob die in Schritt 932 eingelesenen Bilddaten mit den in Schritt 910 eingelesenen Formdaten des vorgegebenen Teils übereinstimmen oder nicht. Falls die Beurteilung in Schritt 968 positiv ist, führt die Verarbeitung zu einem Schritt 970, in welchem das Quittungsflag gesetzt wird, und anschließend zu der Vereinigungsstelle 990, um den Teilprozess 900 zu beenden.

Falls die Beurteilung in Schritt 968 negativ ist, d.h., falls in Schritt 968 beurteilt wird, dass kein korrektes Teil erkannt wird, verzweigt die Verarbeitung zu dem Vereinigungspunkt 980, zu welchem auch dann verzweigt wird, falls die Beurteilung in Schritt 962 negativ ist, d.h., falls in Schritt 962 beurteilt wird, dass der Entnahmeort nicht korrekt ist.

Von dem Vereinigungspunkt 980 aus führt die Verarbeitung zu einem Schritt 982, in welchem das Fehlerflag gesetzt wird. Das Setzen des Fehlerflags kann als Erkennung eines Entnahmefehlers verstanden werden. Anschließend führt die Verarbeitung über den Vereinigungspunkt 990 ebenfalls zur Beendigung des Teilprozesses 900.

Aus vorstehender Beschreibung des Auswertungsprozesses 900 ergibt sich, dass das Quittungsflag dann gesetzt wird, wenn eine erkannte Handposition einem Entnahmeort unmittelbar zuordenbar ist oder eine extrapolierte Trajektorie von Handpositionen einem Entnahmeort mit hinreichender Wahrscheinlichkeit zuordenbar ist, wenn der zugeordnete Entnahmeort dem Ablageort eines vorgegebenen Teils entspricht und wenn bei aktivierter Teileerkennung ein korrektes Teil erkannt wird. Andererseits wird ein Fehlerflag gesetzt, wenn der zugeordnete Entnahmeort nicht dem Ablageort des vorgegebenen Teils entspricht oder wenn der zugeordnete Entnahmeort zwar dem Ablageort des vorgegebenen Teils entspricht, aber bei aktivierter Teileerkennung ein Bildvergleich ergibt, dass das entnommene Teil nicht das vorgegebene Teil ist. Wenn der zugeordnete Entnahmeort korrekt ist, d.h., dem Ablageort des vorgegebenen Teils entspricht, und die Teileerkennung nicht aktiv ist, endet der Teilprozess 900 ohne ein gesetztes Flag. Der Zustand der Flags (gesetzt/nicht gesetzt) wird beim Rücksprung an den aufrufenden Prozess übergeben. Der Zustand der Flags wird in dem aufrufenden Prozess 800 in den Schritten 846, 850 und 852 ausgewertet.

Der vorstehende Prozesssablauf ist ein mögliches Beispiel zur Ausführung des erfindungsgemäßen Verfahrens. Es versteht sich, dass eine konkrete Implementierung Abwandlungen, Auslassungen oder Hinzufügungen von Einzelschritten oder Abschnitten der vorstehend beschriebenen Prozesse 800, 900 vorsehen kann. Beispielsweise kann bei Beginn des Prozesses 800 eine manuelle oder automatische Anmeldung an dem Regal 18, vorzugsweise durch das individualisierte Vibrationsarmband 54, vorgesehen sein.

Aus vorstehender Beschreibung können insbesondere folgende Merkmale des erfindungsgemäßen Verfahrens festgehalten werden:
- Ein Lasersensor oder dergleichen bildet einen zweidimensionalen (oder schmalen dreidimensionalen) Laservorhang vor dem Regal 18 mit ausreichender Auflösung über die Regalbreite und -höhe. Bei größeren Regalinstallationen können Sensor-Arrays aus mehreren 2D-Lasersensoren vorgesehen sein.
- Der aktuelle bzw. aktive Auftrag 105x bzw. die von diesem vorgegebenen, zu entnehmenden Teile, wird bzw. werden den entsprechenden Behältern 34 zugeordnet.
- Mit dem Lasersensor oder dergleichen werden Handgriffe in die Behälter 34 des Regals 18 erfasst. Ein fehlerhafter Zugriff wird durch Auswertung der erfassten Handgriffe erkannt. Bei einem fehlerhaften Zugriff wird über Funk (vgl. Funkschnittstelle 76 am Steuergerät/Industrie-PC 58) an dem Vibrationsarmband 54 ein Vibrationssignal 55 ausgelöst. Als Sender kann auch ein USB-Sendemodul eingesetzt werden, das ein proprietäres Protokoll und eine Standard-Frequenz (433/868/915 MHz) verwendet. Auf einem Bildschirm kann der Fehler optional zusätzlich visualisiert werden.
- Die Auftragswarteschlange 105 kann durch die Bedienperson 48 über Berührung aktiver Kleinzonen 100 an dem Regal 18 als virtuelle Taster gesteuert werden. Die aktiven Bereiche können durch Sticker oder dergleichen visualisiert werden. Die aktiven Bereiche werden durch den gleichen Lasersensor erfasst, der auch die Handgriffe in die KLT-Behälter 34 erfasst.
- Die Auftragswarteschlange 105 setzt Befehle, die über die aktiven Kleinzonen beispielsweise über Gestensteuerung eingegeben werden, um. Die aktive Auftragsnummer kann beispielsweise auf dem Vibrationsarmband 54 dargestellt werden.
- Es kann ein optischer Scanner zur Erfassung von codierten Auftragsdaten vorgesehen sein. Wenn ein markierter Auftrag durch den am Regal 18 angebrachten Scanner erfasst wird, kann dieser zur Synchronisierung als neuer Startpunkt festgelegt und durch die Warteschlangensteuerung aktiviert werden.

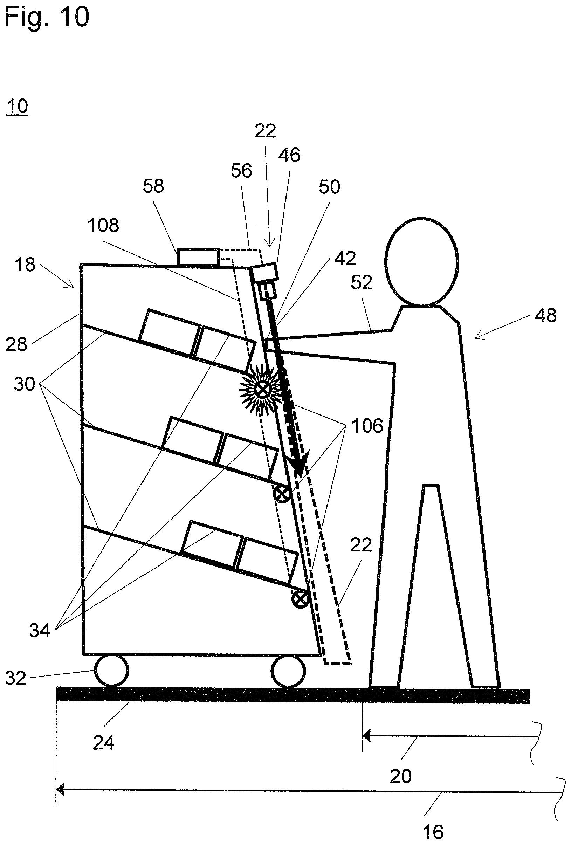

Nachstehend wird noch eine weitere Ausführungsvariante der vorliegenden Erfindung anhand der Darstellung in Fig. 10 beschrieben werden. Die Ausführungsvariante in Fig. 10 entspricht der in Fig. 4 gezeigten Ausführungsvariante mit dem Unterschied, dass an dem Rollregal 18 mehrere Signalleuchten 106 entsprechend den Positionen der Regalfächer 30 vorgesehen sind. Die Signalleuchten 106 sind mittels einer Steuerleitung (oder Lichtstromleitung) 108 mit dem Steuergerät 58 verbunden. Das Steuergerät 58 wertet Abtastdaten des Laserrangers 46 in oben beschriebener Weise aus und gibt eine Warnung oder Bestätigung über die Signalleuchten 106 aus, wenn ein Entnahmefehler bzw. eine korrekte Teileentnahme erfasst wurden.

Die Erfindung wurde vorstehend anhand bevorzugter Ausführungsbeispiele, -varianten, -alternativen und Abwandlungen beschrieben und in den Figuren veranschaulicht. Diese Beschreibungen und Darstellungen sind rein schematisch und schränken den Schutzumfang der Ansprüche nicht ein, sondern dienen nur deren beispielhafter Veranschaulichung. Es versteht sich, dass die Erfindung in vielfältiger Weise ausgeführt und abgewandelt werden kann, ohne den Schutzumfang der Patentansprüche zu verlassen. Die in den einzelnen Ausführungsbeispielen, -varianten, -alternativen und Abwandlungen beschriebenen Merkmale sind, soweit es nicht ersichtlich ausgeschlossen ist oder ausdrücklich verworfen wurde, untereinander austauschbar. Ferner können einzelne Merkmale, die vorstehend beschrieben und/oder in den Figuren dargestellt wurden, weggelassen werden, ohne den Kern der Erfindung zu berühren, der nur durch die in den beigefügten Ansprüchen angegebenen Merkmale definiert ist.

Obschon in den vorstehend beschriebenen und zeichnerisch dargestellten Ausführungsbeispielen und -varianten jeweils nur eine Abtasteinheit 22 (IR-Tiefenkamera 36, Infrarot-Laserranger 44, Nahfeld-Laserranger 46) in Bezug genommen wurde, können zur Verbesserung der Auflösung (Genauigkeit) und Antwortzeit auch jeweils zwei oder mehr Abtasteinheiten 22 je Regal 18 vorgesehen sein.

In einer Weiterbildung können aktive Zonen auch an den Behältern 34 oder in deren Umgebung definiert werden. Dadurch kann die Quittierung einer Teileentnahme für die Bedienperson weiter vereinfacht werden.

Aktive Kleinzonen bzw. virtuelle Zonen können auch dazu verwendet werden, Materialabrufe in einem Kanbanprozess auszulösen. Eine solche erweiterte Anwendung kann mit einem Feedback gekoppelt sein (hierzu sind beispielsweise vordefinierte Vibrationsmuster am Vibrationsarmband geeignet) und kann bei Bedarf auf einfache Weise gegen versehentliche Abrufe geschützt werden. Ein solcher Schutz kann beispielsweise einen Bestätigungsknopfdruck am Armband, eine Anbringung der virtuellen Zone oberhalb der Eingriffzone, Vorsehen eines doppelten Drückens, Mindestzeitabstände zwischen zwei Materialabrufen etc. umfassen.

Obschon die Erfindung vorliegend anhand einer Überwachung von Teileentnahmevorgängen beschrieben und veranschaulicht wurde, ist eine Übertragung auf Teileablagevorgänge ohne Weiteres möglich, wie etwa bei der Kommissionierung von Poststücken oder dergleichen. Dabei kann die Anpassung an den umgekehrten Vorgang, bei dem die Entnahme aus vordefinierten Ablagefächern in eine Ablage in vordefinierten Sortierfächern oder dergleichen entspricht, dem notorischen Wissen und Können des Fachmanns überlassen bleiben.

Eine Vorrichtung zur Überwachung einer Teileentnahme im Sinne der vorliegenden Erfindung kann beispielsweise durch die Abtasteinheit 22 in Verbindung mit dem Steuergerät 58 und weiteren, je nach Ausführungsform erforderlichen Bauteilen gebildet werden. Ein Teilebereitstellungssystem im Sinne der vorliegenden Erfindung kann beispielsweise das Regal 18 mit Abtasteinheit 22, Steuergerät 58 und weiteren, je nach Ausführungsform erforderlichen Bauteilen enthalten oder durch diese gebildet werden. Im weiteren Sinne kann auch die Bereitstellung 16 bzw. die Montagestrecke 10 selbst als Teilebereitstellungssystem im Sinne der vorliegenden Erfindung verstanden werden

### Bezugszeichenliste

- 10: Montagestrecke
- 12: Montagebereich
- 14: Kraftfahrzeug
- 16: Bereitstellungsbereich
- 18: Regal
- 20: Arbeits- (und Aufenthalts-)bereich
- 22: Abtasteinheit (optische und/oder sensorische Mittel)
- 22a: Ausleuchtbereich
- 24: Hallenboden
- 26: Podest
- 28: Rahmen
- 30: Regalfach
- 32: Rollen
- 34: Lagerbehälter (Teileablageort/Teileentnahmeort)
- 36: IR-Tiefenkamera (bspw. Kinect-Sensor)
- 38: Aufhängung
- 40: Hallendecke
- 42: Tiefenrichtung
- 44: Infrarot-Laserranger
- 44a: Rückstrahl
- 46: Nahfeld-Laserranger
- 48: Bedienperson
- 50: Hand
- 52: Arm
- 54: Vibrationsarmband
- 55: Vibrationsalarm
- 56: Signalleitung
- 58: Steuergerät (z. B. Industrie-PC) (Auswerteeinheit)
- 58a: Datenanschluss
- 60: E/A-Bus
- 62: ROM
- 64: RAM
- 66: CPU
- 68: Bildschirm
- 70: Tastatur
- 70a: USB-Anschluss
- 72: Maus
- 74: Massenspeicher
- 76: Funkschnittstelle
- 78: Funkverbindung
- 80: Armband
- 82: Funktionseinheit
- 82a: Oberseite
- 82b: Randseite
- 84: Batterie
- 86: Verarbeitungseinheit
- 88: Funkschnittstelle
- 90: Vibrationsmotor
- 90a: Masse
- 92: Lautsprechereinheit
- 94: Leuchtanordnung
- 96: Tastenanordnung
- 98: Anzeigematrix
- 100: Aktive Kleinzone
- 102: Aufkleber
- 103: Auftragsdokument
- 103a: Datencode
- 104: Laser-Scanner
- 104a: Ausleuchtbereich
- 105: Auftragswarteschlange
- 105i: Auftrag i
- 105n: Auftrag n
- 105x: Auftrag x
- 106: Signalleuchte
- 108: Steuerleitung
- 800: Überwachungsprozess (Verfahren)
- 810...: (Prozess-/Verfahrens-)Schritte
- 900: Datenauswertungsprozess
- 910...: (Prozess-/Verfahrens-)Schritte

- A: Abstand
- A1 ff.: Behälter-Identifikation
- B: Regal-Breite
- B1 ff.: Behälter-Identifikation
- C1, C2: Behälter-Identifikation
- F: Förderrichtung
- T: Taktlänge

## Patentansprüche

1. Verfahren (800, 900) zur Überwachung einer Teileentnahme aus einem eine Vielzahl von Teileablageorten (34) aufweisenden Teilebereitstellungsystem durch eine Bedienperson (48), wobei das Teilebereitstellungssystem vorzugsweise einem Montage- oder Vormontage- oder Logistikbereich im Fahrzeug-, insbesondere Automobilbau zugeordnet ist, mit den Schritten
- Bereitstellen (810) eines Teileinventars, in welchem durch das Teilebereitstellungsystem bereitgestellten Teilen jeweilige Teileablageorte (34) zugeordnet sind;
- Vorgeben (822) einer Auswahl von Teilen (105x), die wenigstens ein Teil aufweist, das durch die Bedienperson (48) unter den bereitgestellten Teilen aus dem Teilebereitstellungssystem zu entnehmen ist;
- Erkennen (962) eines Entnahmefehlers der Bedienperson (48) mittels einer Abtasteinheit (22) und einer Auswerteeinheit (58); und
- Ausgeben (848) einer Warnung (55), wenn ein Entnahmefehler erkannt wurde, durch Aktivieren eines von der Bedienperson (48) zu tragenden Vibrationsalarmgeräts (54) mittels der Auswerteeinheit (58),
wobei der Schritt des Erkennens eines Entnahmefehlers die Schritte umfasst:
- Erfassen (932-956) eines Teileentnahmeorts in dem Teilebereitstellungssystem als ein Ort einer Teileentnahme durch die Bedienperson mittels der Abtasteinheit (22) auf optische und/oder sensorische Weise;
- Vergleichen (942) des erfassten Teileentnahmeorts mit einem Teileablageort (34) wenigstens eines der Teile der vorgegebenen Auswahl von Teilen (105x) anhand der Zuordnung des Teileablageorts (34) in dem Teileinventar mittels einer Auswerteeinheit (58); und
- Feststellen (962), dass ein Entnahmefehler vorliegt, wenn der Teileentnahmeort nicht mit dem Teileablageort (34) des wenigstens einen der Teile aus der vorgegebenen Auswahl von Teilen (105x) übereinstimmt mittels der Auswerteeinheit (58),
wobei der Schritt des Erfassens des Teileentnahmeorts die Schritte aufweist:
- Erfassen (932, 934) einer Handposition der Bedienperson mittels der Abtasteinheit (22), vorzugsweise mit Auflösung in der Tiefenrichtung (42) der Abtasteinheit (22); und
- Zuordnen (936, 950-956) der erfassten Handposition der Bedienperson (48) zu einem der Teileablageorte (34) des Teilebereitstellungssystems mittels der Auswerteeinheit (58),
wobei der Schritt des Erfassens (932, 934) der Handposition zu mehreren Zeitpunkten erfolgt,
wobei der Schritt des Zuordnens der Handposition die Schritte aufweist:
- Berechnen (972) einer Bewegungstrajektorie durch Verknüpfen vergangener erfasster Handpositionen mittels der Auswerteeinheit (58); und
- Antizipieren (974) einer End-Handposition durch Extrapolieren der ermittelten Bewegungstrajektorie mittels der Auswerteeinheit (58),
wobei eine Zuordnung der Handposition dann erfolgt, wenn die antizipierte End-Handposition mit hinreichender Wahrscheinlichkeit einem möglichen Teileablageort (34) entspricht.

2. Verfahren nach Anspruch 1, **dadurch gekennzeichnet, dass** der Schritt des Erkennens eines Entnahmefehlers die Schritte umfasst:
- Erfassen (932) einer Form eines durch die Bedienperson (48) entnommenen Teiles, insbesondere durch die Abtasteinheit (22), vorzugsweise mit räumlicher Auflösung;
- Vergleichen (968) der erfassten Form mit einer dem Teileinventar zu entnehmenden Form wenigstens eines der Teile der vorgegebenen Auswahl von Teilen (105x); und
- Feststellen (982), dass ein Entnahmefehler vorliegt, wenn die erfasste Form nicht mit der Form des wenigstens einen der Teile der vorgegebenen Auswahl von Teilen (105x) übereinstimmt.

3. Verfahren nach Anspruch 1 oder 2, **dadurch gekennzeichnet, dass** jeweils ein Teil der vorgegebenen Auswahl von Teilen (105x) anhand einer vorgegebenen Reihenfolge in der Auswahl von Teilen (105x) für die Erkennung eines Entnahmefehlers herangezogen wird.

4. Verfahren nach einem der vorstehenden Ansprüche, **dadurch gekennzeichnet, dass** das Vibrationsalarmgerät (54) drahtlos (78) aktiviert wird.

5. Verfahren nach einem der vorstehenden Ansprüche, **weiter gekennzeichnet durch** den Schritt:
- Ausgeben einer visuellen und/oder akustischen Warnung, wenn ein Entnahmefehler erkannt wurde.

6. Verfahren nach einem der vorstehenden Ansprüche, **weiter gekennzeichnet durch** den Schritt:
- Ausgeben (854) einer vibrierenden und/oder visuellen und/oder akustischen Bestätigung, wenn ein fehlerfreier Entnahmevorgang erkannt wurde.

7. Verfahren nach einem der vorstehenden Ansprüche, **dadurch gekennzeichnet, dass** der Schritt des Bereitstellens des Teileinventars den Schritt umfasst:
- Initialisieren (810) der Ablageorte (34) mittels einer zur Erkennung eines Entnahmefehlers verwendeten Abtasteinheit (22).

8. Vorrichtung zur Überwachung einer Teileentnahme aus einem eine Vielzahl von Teileablageorten (34) aufweisenden Teilebereitstellungsystem durch eine Bedienperson, **dadurch gekennzeichnet, dass** die Vorrichtung Mittel aufweist, die zur Ausführung jeweiliger Verfahrensschritte des Verfahrens nach einem der vorstehenden Ansprüche ausgelegt und eingerichtet sind.

9. Vorrichtung nach Anspruch 8, **dadurch gekennzeichnet, dass** die Mittel wenigstens eine Abtasteinheit (22), die zum Abtasten eines zwischen der Bedienperson (48) und den Teileablageorten (34) verlaufenden Raumsegments, insbesondere auf optische und/oder sensorische Weise, ausgelegt und eingerichtet ist, und eine Auswerteeinheit (58), die mit der Abtasteinheit (22) verbunden ist und die zum Auswerten von Ausgangssignalen der Abtasteinheit (22), um eine Handposition der Bedienperson (48) und/oder eine Form eines entnommenen Teils zu erfassen, ausgelegt und eingerichtet ist, umfassen.

10. Vorrichtung nach Anspruch 9, **dadurch gekennzeichnet, dass** die Abtasteinheit (22) ein Gerät aufweist, das aus einer Gruppe ausgewählt ist, welche:
eine Sensoranordnung, die eine Kinect-Spezifikation aufweist,
eine Stereo-Infrarot-Kameraeinheit,
eine 2D-Laser-Tiefenscanner-Einheit,
umfasst, und weist vorzugsweise eine Abtast-Reichweite von maximal 25 m und einen Erfassungswinkel von wenigstens 90°, vorzugsweise bis zu 180°.

11. Vorrichtung nach einem der Ansprüche 8 bis 10, **dadurch gekennzeichnet, dass** das Vibrationsalarmgerät (54) drahtlos (78) mit der Auswerteeinheit (58) verbunden ist, wobei das Vibrationsalarmgerät (54) vorzugsweise ein Vibrationsarmband, eine Armbanduhr, eine an einem Armband angebrachte oder an einer körpernahen Bekleidungstasche zu tragende Vibrationseinheit, ein Mobiltelefon oder Smartphone ist.

12. Vorrichtung nach einem der Ansprüche 8 bis 11, **dadurch gekennzeichnet, dass** die Vorrichtung eine Eigenfehlerrate von weniger als 100 ppm und/oder einer Reaktionszeit von weniger als 1 s bei der Erkennung von Entnahmefehlern aufweist.

13. Teilebereitstellungssystem mit einer Vielzahl von Teileablageorten (34), in welchen Teile zuordenbar abgelegt sind, **dadurch gekennzeichnet, dass** das Teilebereitstellungssystem eine Vorrichtung zur Überwachung einer Teileentnahme nach einem der Ansprüche 8-12 aufweist.

14. Teilebereitstellungssystem nach Anspruch 13, **dadurch gekennzeichnet, dass** das Teilebereitstellungssystem einem Kommissionierungssystem, einer Montagestrecke (10), einer Vormontagestrecke, einem Postverteilungssystem, einem Versandlagersystem oder dergleichen zugehörig ist.

15. Teilebereitstellungssystem nach Anspruch 13 oder 14, **dadurch gekennzeichnet, dass** das Teilebereitstellungssystem einen KLT-Behälterträger bzw. ein KLT-Regal als Teileablageorte (34) und ein Teile- oder Behälter- oder Packstückförderband und/oder ein Montage- oder Vormontageband aufweist.

## Claims

1. A method (800, 900) for monitoring the removal of parts from a part provision system having a large number of part storage locations (34) by an operator (48), wherein the part provision system is preferably associated with an assembly or pre-assembly or logistics zone in the vehicle construction sector, especially automobile sector, having the following steps:
- providing (810) a parts inventory, in which parts provided by the part provision system are associated with respective part storage locations (34);
- specifying (822) a selection of parts (105x) which has at least one part which is to be removed by the operator (48) from the part provision system from among the provided parts;
- recognising (962) a removal error of the operator (48) by means of a scanning unit (22) and an evaluation unit (58); and
- issuing (848) a warning (55) if a removal error has been recognised, by activation of a vibration alarm apparatus (54) to be worn by the operator (48) by means of the evaluation unit (58),
wherein the step of recognising a removal error comprises the steps:
- detecting (932-956) in an optical and/or sensory manner a part removal location in the part provision system as a location of a removal of parts by the operator by means of the scanning unit (22);
- comparing (942) the detected part removal location with a part storage location (34) at least of one of the parts of the specified selection of parts (105x) using the association of the part storage location (34) in the parts inventory by means of an evaluation unit (58); and
- establishing (962) that there is a removal error if the part removal location does not match the part storage location (34) of the at least one of the parts from the specified selection of parts (105x) by means of the evaluation unit (58),
wherein the step of detecting the part removal location has the following steps:
- detecting (932, 934) a hand position of the operator by means of the scanning unit (22), preferably with resolution in the depth direction (42) of the scanning unit (22); and
- associating (936, 950-956) the detected hand position of the operator (48) with one of the part storage locations (34) of the part provision system by means of the evaluation unit (58),
wherein the step of detecting (932, 934) the hand position takes place at several points in time,
wherein the step of associating the hand position has the following steps:
- calculating (972) a movement trajectory by linking past detected hand positions by means of the evaluation unit (58); and
- anticipating (974) a final hand position by extrapolating the ascertained movement trajectory by means of the evaluation unit (58),
wherein an association of the hand position takes place when the anticipated final hand position corresponds with sufficient probability to a possible part storage location (34).

2. A method according to Claim 1, **characterised in that** the step of recognising a removal error comprises the following steps:
- detecting (932) a shape of a part removed by the operator (48), especially by the scanning unit (22), preferably with spatial resolution;
- comparing (968) the detected shape with a shape, to be inferred from the parts inventory, of at least one of the parts of the specified selection of parts (105x); and
- establishing (982) that a removal error exists if the detected shape does not correspond with the shape of the at least one of the parts of the specified selection of parts (105x).

3. A method according to Claim 1 or Claim 2, **characterised in that** in each case a part of the specified selection of parts (105x) is used for recognising a removal error using a specified sequence in the selection of parts (105x).

4. A method according to one of the preceding claims, **characterised in that** the vibration alarm apparatus (54) is activated wirelessly (78).

5. A method according to one of the preceding claims, **further characterised by** the step:
- issuing a visual and/or acoustic warning if a removal error has been recognised.

6. A method according to one of the preceding claims, **further characterised by** the step:
- issuing (854) a vibrating and/or visual and/or acoustic confirmation if an error-free removal operation has been recognised.

7. A method according to one of the preceding claims, **characterised in that** the step of providing the parts inventory comprises the step:
- initialising (810) the storage locations (34) by means of a scanning unit (22) used for recognising a removal error.

8. A device for monitoring the removal of parts from a part provision system having a large number of part storage locations (34) by an operator, **characterised in that** the device has means which are designed and set up for carrying out respective method steps of the method according to one of the preceding claims.

9. A device according to Claim 8, **characterised in that** the means comprise at least one scanning unit (22), which is designed and set up to scan a segment of space running between the operator (48) and the part storage locations (34), especially in an optical and/or sensory manner, and an evaluation unit (58) which is connected to the scanning unit (22) and is designed and set up to evaluate output signals of the scanning unit (22) in order to detect a hand position of the operator (48) and/or a shape of a removed part.

10. A device according to Claim 9, **characterised in that** the scanning unit (22) has a device which is selected from a group which comprises:
a sensor arrangement which has a Kinect specification,
a stereo infrared camera unit,
a 2D laser depth scanner unit,
and preferably has a scanning range of at most 25 m and a sensing angle of at least 90°, preferably up to 180°.

11. A device according to one of Claims 8 to 10, **characterised in that** the vibration alarm apparatus (54) is connected wirelessly (78) to the evaluation unit (58), the vibration alarm apparatus (54) preferably being a vibration armband, a wristwatch, a vibration unit which is attached to an armband or to be carried on a close-fitting clothing pocket, a mobile telephone or smartphone.

12. A device according to one of Claims 8 to 11, **characterised in that** the device has an inherent error rate of less than 100 ppm and/or a reaction time of less than 1 s in the recognition of removal errors.

13. A part provision system with a large number of part storage locations (34), in which parts are stored in an assignable manner, **characterised in that** the part provision system has a device for monitoring the removal of parts according to one of Claims 8 - 12.

14. A part provision system according to Claim 13, **characterised in that** the part provision system is associated with a picking system, an assembly line (10), a pre-assembly line, a mail distribution system, a despatch centre system or the like.

15. A part provision system according to Claim 13 or Claim 14, **characterised in that** the part provision system has an SLC container holder or SLC rack as part storage locations (34) and a part or container or package conveyor belt and/or an assembly or pre-assembly belt.

## Revendications

1. Procédé (800, 900) permettant de surveiller le prélèvement de pièces dans un système de fourniture de pièces comportant plusieurs emplacements de stockage de pièces (34) par un opérateur (48), le système de fourniture de pièces étant de préférence associé à une zone de montage ou de pré-montage ou de logistique dans le domaine de la construction de véhicules en particulier de la construction automobile, comprenant des étapes consistant à :
- se procurer (810) un inventaire de pièces dans lequel, des pièces fournies par le système de fourniture de pièces, sont respectivement associées à des emplacements de stockage de pièces (34),
- prédéfinir (822), une sélection de pièces (105x) qui comporte au moins une pièce qui doit être prélevée par l'opérateur (48) parmi les pièces fournies du système de fourniture de pièces,
- identifier (962) un défaut de prélèvement de l'opérateur (48) au moyen d'une unité de balayage (22) et d'une unité d'exploitation (58), et
- délivrer (848) une alarme (55) lorsqu'un défaut de prélèvement a été identifié par activation d'un appareil d'alarme par vibration (54) devant être porté par l'opérateur (48) au moyen de l'unité d'exploitation (58),
l'étape consistant à identifier un défaut de prélèvement comprenant les étapes suivantes consistant à :
- détecter (932, 956) un emplacement de prélèvement de pièces dans le système de fourniture de pièces en tant qu'emplacement de prélèvement de pièces par l'opérateur, au moyen de l'unité de balayage (22) par des moyens optiques et/ou sensoriels,
- comparer (942) l'emplacement de prélèvement de pièces détectées avec un emplacement de stockage (34) d'au moins l'une des pièces de la sélection prédéfinie de pièces (105x), sur le fondement de l'association de l'emplacement de stockage de pièces (34) dans l'inventaire de pièces au moyens d'une unité d'exploitation (58), et
- déterminer (962) qu'il y a un défaut de prélèvement lorsque l'emplacement de prélèvement de pièces ne coïncide pas avec l'emplacement de stockage (34) de la pièce de la sélection prédéfinie de pièces (105x) au moyen de l'unité d'exploitation (58),
l'étape de détection de l'emplacement de prélèvement de pièces comprenant les étapes suivantes consistant à :
- détecter (932, 934) la position de la main de l'opérateur au moyen de l'unité de balayage (22) de préférence avec une résolution dans la direction de la profondeur (42) de l'unité de balayage (22), et
- associer (936, 950-956) la position détectée de la main de l'opérateur (48) à un emplacement de stockage de pièces (34) du système de fourniture de pièces au moyen de l'unité d'exploitation (58),
- l'étape de détection (932, 934) de la position de la main s'effectuant à plusieurs instants,
l'étape d'association de la position de la main comprenant des étapes suivantes consistant à :
- calculer (972) une trajectoire de déplacement par combinaison de positions de main détectées antérieurement au moyen de l'unité d'exploitation (58), et
- anticiper (974) la position finale de la main par extrapolation de la trajectoire de déplacement déterminée au moyen de l'unité d'exploitation (58),
- une association de la position de la main étant effectuée lorsque la position finale de la main anticipée correspond avec une probabilité suffisante à un emplacement de stockage de pièces (34) possible.

2. Dispositif conforme à la revendication 1,
**caractérisé en ce que**
l'étape d'identification d'un défaut de prélèvement comprend les étapes suivantes consistant à :
- détecter (932) la forme d'une pièce prélevée par l'opérateur (48), en particulier par l'unité de balayage (22), de préférence avec une résolution dans l'espace,
- comparer (968) la forme détectée avec la forme d'au moins l'une des pièces de la sélection prédéfinie de pièces (105x) à prélever de l'inventaire de pièces, et
- déterminer (982) qu'il y a un défaut de prélèvement lorsque la forme détectée ne correspond pas à la forme d'au moins l'une des pièces de la sélection prédéfinie de pièces (105x).

3. Procédé conforme à la revendication 1 ou 2,
**caractérisé en ce**
**qu'**une pièce de la sélection prédéfinie de pièces (105x) est respectivement prise en considération en se basant sur un ordre prédéfinie dans la sélection de pièces (105x) pour l'identification d'un défaut de prélèvement.

4. Procédé conforme à l'une des revendications précédentes,
**caractérisé en ce que**
l'appareil d'alarme par vibrations (54) est activé par une liaison sans fil (78).

5. Procédé conforme à l'une des revendications précédentes,
**caractérisé en outre**
**par** une étape consistant à :
délivrer une alarme visuelle et/ou acoustique lorsqu'un défaut de prélèvement a été identifié.

6. Procédé conforme à l'une des revendications précédentes,
**caractérisé en outre**
**par** une étape consistant à :
délivrer (854) une confirmation par vibrations et/ou visuelle et/ou acoustique lorsqu'un processus de prélèvement exempt défaut a été identifié.

7. Procédé conforme à l'une des revendications précédentes,
**caractérisé en ce que**
l'étape consistant à fournir l'inventaire de pièces comprend une étape consistant à :
initialiser (810) l'emplacement de stockage (34) au moyen d'une unité de balayage (22) utilisée pour identifier un défaut de prélèvement.

8. Dispositif permettant de surveiller le prélèvement de pièces dans un système de fourniture de pièces comprenant un ensemble d'emplacements de stockage de pièces (34) par un opérateur,
**caractérisé en ce qu'**
il comporte des moyens qui sont conçus et réalisés pour permettre la mise en œuvre des étapes respectives du procédé conforme à l'une des revendications précédentes.

9. Dispositif conforme à la revendication 8,
**caractérisé en ce que**
les moyens comportent au moins une unité de balayage (22) qui est conçue et réalisée pour permettre de balayer un segment de l'espace s'étendant entre l'opérateur (48) et les emplacements de stockage de pièces (34), en particulier de façon optique et/ou sensorielle et une unité d'exploitation (58) qui est reliée à l'unité de balayage (22) et est conçue, est réalisée pour permettre d'exploiter les signaux de sortie de l'unité de balayage (22) pour permettre de détecter la position de la main de l'opérateur (48) et/ou la forme d'une pièce prélevée.

10. Dispositif conforme à la revendication 9,
**caractérisé en ce que**
l'unité de balayage (22) comporte un appareil qui est choisi dans le groupe formé par :
- un agencement de capteurs ayant une spécification Kinect,
- une unité de caméra stéréo-infrarouge,
- une unité de scanner en profondeur à laser 2D,
et a de préférence une portée d'au maximum 25 m et un angle de détection d'au moins 90°, de préférence allant jusqu'à 180°.

11. Dispositif conforme à l'une des revendications 8 à 10,
**caractérisé en ce que**
l'appareil d'alarme par vibrations (54) est relié à l'unité d'exploitations (58) par une liaison sans fil (78), l'appareil d'alarme par vibration (54) étant de préférence un brassard vibrant, un bracelet montre, une unité vibrante destinée à être portée dans une poche d'un vêtement proche du corps, ou installée sur un brassard, un téléphone mobile ou un smart-phone.

12. Dispositif conforme à l'une des revendications 8 à 11,
**caractérisé en ce qu'**
il a un taux de défaut propre inférieur à 100 ppm et/ou un temps de réaction de moins d'une seconde lors de l'identification de défauts de prélèvement.

13. Système de fourniture de pièces ayant un ensemble d'emplacements de stockage de pièces (34) dans lesquels des pièces peuvent être stockées de façon attribuable,
**caractérisé en ce qu'**
il comporte un dispositif de surveillance de prélèvement conforme à l'une des revendications 8 à 12.

14. Système de fourniture de pièces conforme à la revendication 13,
**caractérisé en ce qu'**
il est constitué par un système de préparation de commandes, une chaine de montage (10), une chaine de pré-montage, un système de répartition de courrier, centre d'expédition ou similaire.

15. Système de fourniture de pièces conforme à la revendication 13 ou 14,
**caractérisé en ce qu'**
il comporte un support de bac pour petit matériel, ou une étagère pour bacs de petit matériel en tant qu'emplacement de stockage de pièces (34) et une bande de transport de pièces et/ou de bacs et/ou de paquets et/ou une chaine de montage et/ou une chaine de pré-montage.
